(19) Europäisches Patentamt / European Patent Office / Office européen des brevets

(11) EP 4 603 912 A2

(12) EUROPEAN PATENT APPLICATION

(43) Date of publication:
**20.08.2025 Bulletin 2025/34**

(21) Application number: **25156752.5**

(22) Date of filing: **10.02.2025**

(51) International Patent Classification (IPC):
***G03G 5/06*** *(2006.01)* ***G03G 9/087*** *(2006.01)*

(52) Cooperative Patent Classification (CPC):
**G03G 9/08755; G03G 5/06142**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.02.2024 JP 2024019749**
**08.10.2024 JP 2024176747**

(71) Applicant: **CANON KABUSHIKI KAISHA**
**Tokyo 146-8501 (JP)**

(72) Inventors:
- **YAMADA, Motoya**
  **Ohta-ku, Tokyo, 146-8501 (JP)**
- **TAKAHASHI, Naohiro**
  **Ohta-ku, Tokyo, 146-8501 (JP)**
- **MITSUDA, Haruhiko**
  **Ohta-ku, Tokyo, 146-8501 (JP)**
- **KAMAE, Kentaro**
  **Ohta-ku, Tokyo, 146-8501 (JP)**

(74) Representative: **TBK**
**Bavariaring 4-6**
**80336 München (DE)**

# (54) ELECTROPHOTOGRAPHIC APPARATUS AND PROCESS CARTRIDGE

(57) Provided is an electrophotographic apparatus in which the occurrence of image density unevenness (pattern memory) at the time of repeated use under a high-temperature and high-humidity environment is suppressed. The electrophotographic apparatus is an electrophotographic apparatus including: an electrophotographic photosensitive member; and a developing unit, which includes a toner, and which is configured to develop an electrostatic latent image with the toner to form a toner image on a surface of the electrophotographic photosensitive member, wherein the electrophotographic photosensitive member includes a surface layer containing a compound represented by the formula (1), a binder resin, and silicone resin particles, and wherein the toner includes toner particles each containing a polyester resin having a polyethylene terephthalate segment.

EP 4 603 912 A2

## Description

BACKGROUND OF THE INVENTION

Field of the Invention

The present disclosure relates to an electrophotographic apparatus and a process cartridge.

Description of the Related Art

In recent years, in an electrophotographic apparatus, there have been various demands, such as an increase in speed, a reduction in size, and energy savings. In an electrophotographic photosensitive member to be used in the electrophotographic apparatus, there has been a demand for an increase in sensitivity corresponding to the increase in speed. For example, in Japanese Patent Application Laid-Open No. 2012-088397, there is a description of a technology that provides a high-sensitivity electrophotographic photosensitive member through use of a butadiene-based compound having a butadiene trimer structure in a molecule thereof as a charge transporting substance. In addition, in order to achieve an energy-saving electrophotographic apparatus, there has been proposed a technology for fixing a toner at low temperature. In Japanese Patent Application Laid-Open No. 2004-280085, there is a description of a technology regarding a toner containing, as one of resin components, a polyester obtained by causing polyethylene terephthalate, an alcohol component, and a carboxylic acid component to react with each other.

However, when the electrophotographic photosensitive member described in Japanese Patent Application Laid-Open No. 2012-088397 and the toner described in Japanese Patent Application Laid-Open No. 2004-280085 are used in combination, there has been room for improvement at the time of repeated use under a high-temperature and high-humidity environment. That is, a light potential difference occurs between a portion on the electrophotographic photosensitive member in which printing is repeated and the other portions, and image density unevenness (pattern memory) may occur.

SUMMARY OF THE INVENTION

The present disclosure is directed to provide an electrophotographic apparatus in which the occurrence of image density unevenness (pattern memory) at the time of repeated use under a high-temperature and high-humidity environment is suppressed.

According to the present disclosure, there is provided an electrophotographic apparatus including: an electrophotographic photosensitive member; a charging unit configured to charge a surface of the electrophotographic photosensitive member; an image exposing unit configured to irradiate the charged surface of the electrophotographic photosensitive member with image exposure light to form an electrostatic latent image on the surface of the electrophotographic photosensitive member; a developing unit, which includes a toner, and which is configured to develop the electrostatic latent image with the toner to form a toner image on the surface of the electrophotographic photosensitive member; a transfer unit configured to transfer the toner image from the surface of the electrophotographic photosensitive member onto a transfer material; and a cleaning unit configured to remove a residual toner remaining on the surface of the electrophotographic photosensitive member after the toner image is transferred from the surface of the electrophotographic photosensitive member onto the transfer material, wherein the electrophotographic photosensitive member includes a surface layer containing a compound represented by the following formula (1), a binder resin, and silicone resin particles, and wherein the toner includes toner particles each containing a polyester resin having a polyethylene terephthalate segment:

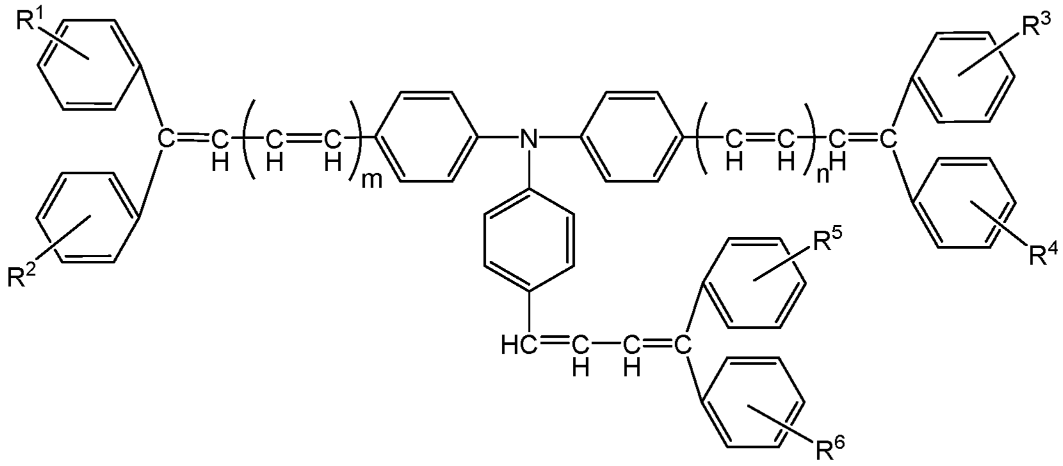

(1)

in the formula (1), $R^1$, $R^2$, $R^3$, $R^4$, $R^5$, and $R^6$ each independently represent a hydrogen atom, a halogen atom, a substituted or unsubstituted alkyl group having 1 or more and 20 or less carbon atoms, a substituted or unsubstituted alkoxy group having 1 or more and 20 or less carbon atoms, or a substituted or unsubstituted aryl group having 6 or more and 30 or less carbon atoms, or $R^1$ and $R^2$, $R^3$ and $R^4$, and $R^5$ and $R^6$ are each independently bonded to each other to form a hydrocarbon ring structure, and "n" and "m" each independently represent 1 or 2.

In addition, according to the present disclosure, there is provided a process cartridge including: an electrophotographic photosensitive member; and a developing unit, which includes a toner, and which is configured to develop an electrostatic latent image formed on a surface of the electrophotographic photosensitive member with the toner to form a toner image on the surface of the electrophotographic photosensitive member, the process cartridge integrally supporting the electrophotographic photosensitive member and the developing unit, and being detachably attachable onto a main body of an electrophotographic apparatus, wherein the electrophotographic photosensitive member includes a surface layer containing a compound represented by the following formula (1), a binder resin, and silicone resin particles, and wherein the toner includes toner particles each containing a polyester resin having a polyethylene terephthalate segment:

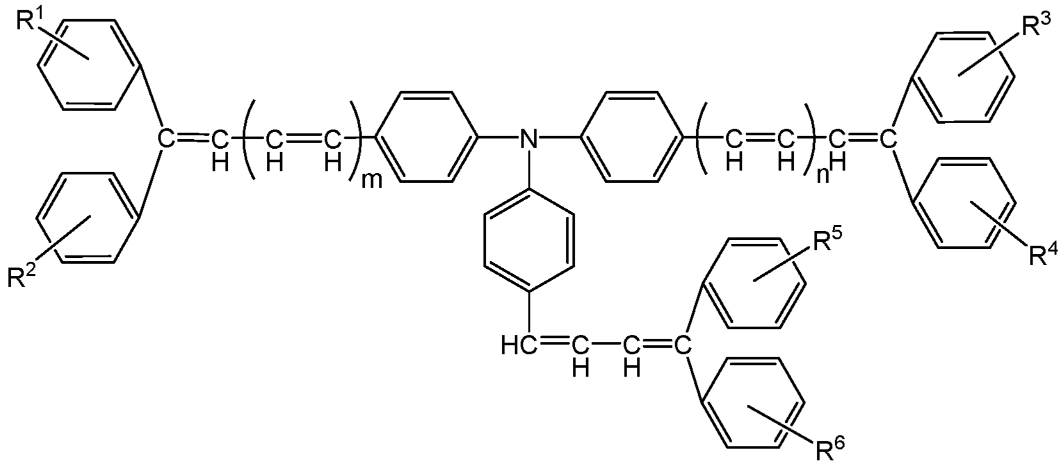

(1)

in the formula (1), $R^1$, $R^2$, $R^3$, $R^4$, $R^5$, and $R^6$ each independently represent a hydrogen atom, a halogen atom, a substituted or unsubstituted alkyl group having 1 or more and 20 or less carbon atoms, a substituted or unsubstituted alkoxy group having 1 or more and 20 or less carbon atoms, or a substituted or unsubstituted aryl group having 6 or more and 30 or less carbon atoms, or $R^1$ and $R^2$, $R^3$ and $R^4$, and $R^5$ and $R^6$ are each independently bonded to each other to form a hydrocarbon ring structure, and "n" and "m" each independently represent 1 or 2.

Further features of the present invention will become apparent from the following description of exemplary embodiments with reference to the attached drawings.

BRIEF DESCRIPTION OF THE DRAWINGS

FIG. 1 is a view for illustrating an example of a process cartridge including an electrophotographic photosensitive member in the present disclosure.

FIG. 2 is a view for illustrating an example of an electrophotographic apparatus including the electrophotographic photosensitive member in the present disclosure.

FIG. 3 is a schematic view for illustrating an example of the configuration of the electrophotographic photosensitive member in the present disclosure.

DESCRIPTION OF THE EMBODIMENTS

An electrophotographic apparatus according to the present disclosure is an electrophotographic apparatus including: an electrophotographic photosensitive member; a charging unit configured to charge a surface of the electrophotographic photosensitive member; an image exposing unit configured to irradiate the charged surface of the electrophotographic photosensitive member with image exposure light to form an electrostatic latent image on the surface of the electrophotographic photosensitive member; a developing unit, which includes a toner, and which is configured to develop the electrostatic latent image with the toner to form a toner image on the surface of the electrophotographic photosensitive member; a transfer unit configured to transfer the toner image from the surface of the electrophotographic photosensitive member onto a transfer material; and a cleaning unit configured to remove a residual toner remaining on the surface of the electrophotographic photosensitive member after the toner image is transferred from the surface of the electrophotographic photosensitive member onto the transfer material, wherein the electrophotographic photosensitive member includes a surface layer containing a compound represented by the following formula (1), a binder resin, and silicone resin particles, and wherein the toner includes toner particles each containing a polyester resin having a polyethylene terephthalate segment:

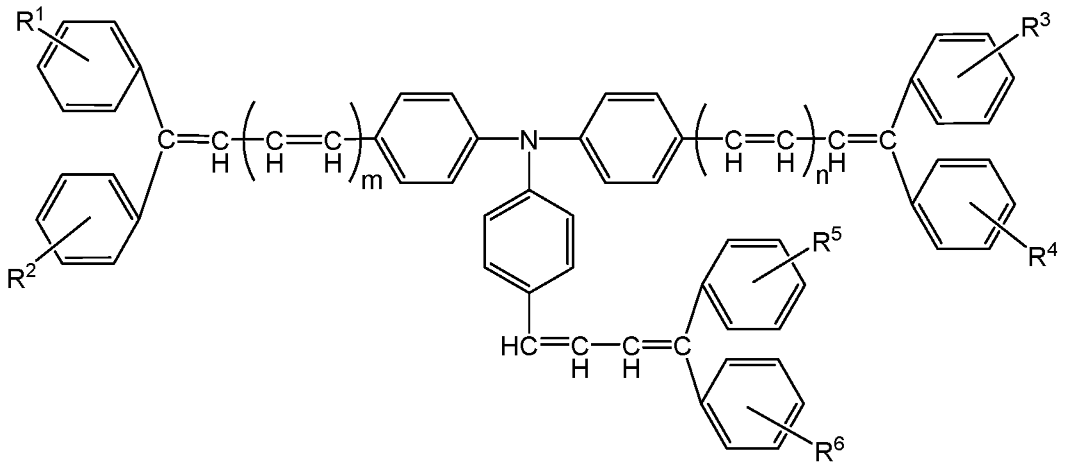

(1)

in the formula (1), $R^1$, $R^2$, $R^3$, $R^4$, $R^5$, and $R^6$ each independently represent a hydrogen atom, a halogen atom, a substituted or unsubstituted alkyl group having 1 or more and 20 or less carbon atoms, a substituted or unsubstituted alkoxy group having 1 or more and 20 or less carbon atoms, or a substituted or unsubstituted aryl group having 6 or more and 30 or less carbon atoms, or $R^1$ and $R^2$, $R^3$ and $R^4$, and $R^5$ and $R^6$ are each independently bonded to each other to form a hydrocarbon ring structure, and "n" and "m" each independently represent 1 or 2.

The inventors have made investigations, and as a result, have found that the occurrence of image density unevenness (pattern memory) at the time of repeated use under a high-temperature and high-humidity environment can be suppressed with the following configuration. In each of an electrophotographic apparatus and a process cartridge according to the present disclosure, a surface layer of an electrophotographic photosensitive member contains a compound represented by the formula (1), a binder resin, and silicone resin particles, and a toner includes toner particles each containing a polyester resin having a polyethylene terephthalate segment. The electrophotographic photosensitive member is hereinafter sometimes simply referred to as "photosensitive member."

The image density unevenness (pattern memory) refers to, for example, the following phenomenon in which, when an image pattern including a solid black band portion extending in a drum circumferential direction in part of an output image is repeatedly output, and then a full-screen halftone image without the solid black band portion is output, a portion corresponding to a portion that has been the solid black band portion of the image pattern including the solid black band portion is output in a light state in the full-screen halftone image.

The inventors have assumed the reasons for which each of the electrophotographic apparatus and the process cartridge according to the present disclosure is excellent in suppressing effect on the occurrence of image density

unevenness at the time of repeated use under a high-temperature and high-humidity environment to be as described below.

The compound represented by the formula (1) is a butadiene-based compound having a butadiene trimer structure in a molecule thereof, and is known to be used in an electrophotographic photosensitive member as a high-sensitivity charge transporting substance. However, the compound tends to have high polarity, and hence the affinity for water thereof tends to be increased.

Meanwhile, the toner having the polyethylene terephthalate segment also tends to have high polarity as compared to a polyester resin that is generally used in a toner, and hence the affinity for water thereof tends to be increased. As a result, when the toner is present on the surface of the electrophotographic photosensitive member, the amount of moisture on the surface of the electrophotographic photosensitive member becomes higher than the amount of moisture in air under a usage environment. The influence thereof becomes significant in an electrophotographic photosensitive member that contains a butadiene-based compound represented by the formula (1) in a surface layer under a high-temperature and high-humidity environment.

When an image including a solid black band portion is output, the amount of the toner present on the surface of the electrophotographic photosensitive member is increased, and hence the influence of an increase in amount of moisture on the surface of the electrophotographic photosensitive member is also increased. The moisture on the surface of the electrophotographic photosensitive member influences the sensitivity of a charge transporting substance, resulting in a sensitivity difference between a solid black band portion and a solid white portion. It is conceived that, when an image is output under a state in which the sensitivity difference remains, a density difference occurs between a portion corresponding to the solid black band portion and a portion corresponding to the solid white portion, and this density difference appears on the image as a pattern memory.

The inventors have made investigations, and as a result, have found that, when the silicone resin particles are incorporated into the surface layer of the electrophotographic photosensitive member, an electrophotographic apparatus and a process cartridge each having a pattern memory suppressed are obtained.

The inventors have assumed the reasons for which each of the electrophotographic apparatus and the process cartridge of the present disclosure is excellent in suppressing effect on a pattern memory to be as described below.

The surface layer of the electrophotographic photosensitive member of the present disclosure contains the silicone resin particles and the butadiene-based compound represented by the formula (1). It is assumed that, in the surface layer of the electrophotographic photosensitive member, the silicone resin particles interposed between the surface (interface between the surface layer and air) and the butadiene-based compound suppress the influence of moisture on the butadiene-based compound from the surface. When the influence of moisture on the butadiene-based compound from the surface is reduced, a change in sensitivity caused by the moisture is reduced, and a pattern memory is suppressed.

The present disclosure is described in detail below by way of exemplary embodiments.

<Electrophotographic Photosensitive Member>

The electrophotographic photosensitive member of each of the electrophotographic apparatus and the process cartridge according to the present disclosure is characterized by including a surface layer containing a compound represented by the formula (1), a binder resin, and silicone resin particles.

An example of the layer configuration of the electrophotographic photosensitive member in the present disclosure is illustrated in FIG. 3. In FIG. 3, an undercoat layer 22, a charge generating layer 23, and a charge transporting layer (surface layer) 24 are laminated on a support 21 to form a laminate type photosensitive layer.

In the present disclosure, the outermost surface layer of the electrophotographic photosensitive member is defined as a surface layer.

An example of a method of producing the electrophotographic photosensitive member in the present disclosure is a method including: preparing coating liquids for respective layers to described later; applying the liquids in a desired layer order; and drying the liquids. In this case, examples of a method of applying each of the coating liquids include dip coating, spray coating, inkjet coating, roll coating, die coating, blade coating, curtain coating, wire bar coating, and ring coating. Of those, dip coating is preferred from the viewpoints of efficiency and productivity.

The respective layers are described below.

<Support>

The support of the electrophotographic photosensitive member is preferably a support having electroconductivity (electroconductive support). In addition, examples of the shape of the support include a cylindrical shape, a belt shape, and a sheet shape. A support having a cylindrical shape out of those shapes is preferred. In addition, the surface of the support may be subjected to electrochemical treatment such as anodic oxidation, blast treatment, or cutting treatment.

A metal, a resin, glass, or the like is preferred as a material for the support.

Examples of the metal include aluminum, iron, nickel, copper, gold, stainless steel, and an alloy thereof. An aluminum support using aluminum out of those metals is preferred.

In addition, it is preferred that electroconductivity be imparted to the resin or the glass by treatment, such as mixing or coating with an electroconductive material.

The surface of the electroconductive support may be subjected to anodic oxide film treatment, surface treatment with chemicals, hot water, or the like, coloring treatment, or diffuse reflection treatment such as surface roughening, as required, to the extent that image quality is not influenced. The diffuse reflection treatment is particularly effective when the photosensitive member in the present disclosure is used in an electrophotographic process using a laser as an exposure light source. That is, in the electrophotographic process using a laser as an exposure light source, the wavelengths of laser light are uniform, and hence the laser light reflected from the surface of the photosensitive member and the laser light reflected inside the photosensitive member cause interference, with the result that an interference fringe caused by the interference may appear on an image to cause an image defect. Thus, the image defect caused by the interference of phase-aligned laser light can be prevented by subjecting the surface of the electroconductive support to the diffuse reflection treatment.

<Electroconductive Layer>

An electroconductive layer may be arranged on the support. The arrangement of the electroconductive layer can conceal scratches and irregularities on the surface of the support, and control the reflection of light on the surface of the support.

The electroconductive layer preferably contains electroconductive particles and a binder resin.

A material for the electroconductive particles is, for example, a metal oxide, a metal, or carbon black.

Examples of the metal oxide include zinc oxide, aluminum oxide, indium oxide, silicon oxide, zirconium oxide, tin oxide, titanium oxide, strontium titanate, magnesium oxide, antimony oxide, and bismuth oxide. Examples of the metal include aluminum, nickel, iron, nichrome, copper, zinc, and silver.

Of those, metal oxide particles are preferably used as the electroconductive particles, and in particular, titanium oxide particles, tin oxide particles, and zinc oxide particles are more preferably used.

When the metal oxide particles are used as the electroconductive particles, the surface of each of the metal oxide particles may be treated with a silane coupling agent or the like, or the metal oxide particles may each be doped with an element, such as phosphorus or aluminum, or an oxide thereof.

In addition, each of the electroconductive particles may have a laminate configuration including a core particle and a coating layer coating the particle. Examples of the core particle include a titanium oxide particle, a barium sulfate particle, and a zinc oxide particle. Examples of the coating layer include metal oxide particles such as tin oxide.

In addition, when the metal oxide particles are used as the electroconductive particles, the volume-average particle diameter thereof is preferably 1 nm or more and 500 nm or less, more preferably 3 nm or more and 400 nm or less.

Examples of the binder resin include a polyester resin, a polycarbonate resin, a polyvinyl acetal resin, an acrylic resin, a silicone resin, an epoxy resin, a melamine resin, a polyurethane resin, a phenol resin, and an alkyd resin.

In addition, the electroconductive layer may further contain a silicone oil, resin particles, a concealing agent such as titanium oxide, and the like.

The electroconductive layer may be formed by: preparing a coating liquid for an electroconductive layer containing the above-mentioned respective materials and a solvent; forming a coat thereof on the support; and drying the coat. Examples of the solvent to be used in the coating liquid for an electroconductive layer include an alcohol-based solvent, a sulfoxide-based solvent, a ketone-based solvent, an ether-based solvent, an ester-based solvent, and an aromatic hydrocarbon-based solvent. Examples of a dispersion method for dispersing the electroconductive particles in the coating liquid for an electroconductive layer include methods using a paint shaker, a sand mill, a ball mill, and a liquid collision-type high-speed disperser.

The thickness of the electroconductive layer is preferably 1 μm or more and 50 μm or less, particularly preferably 3 μm or more and 40 μm or less.

<Undercoat Layer>

In the present disclosure, an undercoat layer may be arranged on the support or the electroconductive layer. The arrangement of the undercoat layer can improve an adhesive function between layers to impart a charge injection inhibiting function.

The undercoat layer preferably contains a binder resin. In addition, the undercoat layer may be formed as a cured film by polymerizing a composition containing a monomer having a polymerizable functional group.

Examples of the binder resin include an acetal resin such as polyvinyl butyral, a polyester resin, a polycarbonate

resin, an acrylic resin, an epoxy resin, a melamine resin, a polyurethane resin, a phenol resin, a polyvinyl phenol resin, an alkyd resin, a polyvinyl alcohol resin, a polyethylene oxide resin, a polypropylene oxide resin, a polyamide resin, a polyamic acid resin, a polyimide resin, a polyamide imide resin, and a cellulose resin.

Examples of the polymerizable functional group of the monomer having a polymerizable functional group include an isocyanate group, a blocked isocyanate group, a methylol group, an alkylated methylol group, an epoxy group, a metal alkoxide group, a hydroxy group, an amino group, a carboxy group, a thiol group, a carboxylic acid anhydride group, and a carbon-carbon double bond group.

In addition, the undercoat layer may further contain an electron transporting substance, metal oxide particles, metal particles, an electroconductive polymer, and the like for the purpose of improving electrical characteristics. Of those, an electron transporting substance and metal oxide particles are preferably used.

Examples of the electron transporting substance include a quinone compound, an imide compound, a benzimidazole compound, a cyclopentadienylidene compound, a fluorenone compound, a xanthone compound, a benzophenone compound, a cyanovinyl compound, a halogenated aryl compound, a silole compound, and a boron-containing compound. An electron transporting substance having a polymerizable functional group may be used as the electron transporting substance and copolymerized with the above-mentioned monomer having a polymerizable functional group to form the undercoat layer as a cured film.

Examples of the metal oxide particles include particles of indium tin oxide, tin oxide, indium oxide, titanium oxide, strontium titanate, zinc oxide, and aluminum oxide. Particles of silicon dioxide may also be used. Examples of the metal particles include particles of gold, silver, and aluminum.

The metal oxide particles to be incorporated into the undercoat layer may be subjected to surface treatment with a surface treatment agent such as a silane coupling agent before use.

A general method is used as a method of subjecting the metal oxide particles to the surface treatment. Examples thereof include a dry method and a wet method.

The dry method includes, while stirring the metal oxide particles in a mixer capable of high-speed stirring such as a Henschel mixer, adding an alcohol aqueous solution, an organic solvent solution, or an aqueous solution containing the surface treatment agent, and uniformly dispersing the mixture, followed by drying.

In addition, the wet method includes stirring the metal oxide particles and the surface treatment agent in a solvent, or dispersing the metal oxide particles and the surface treatment agent in a solvent with, for example, a sand mill through use of glass beads or the like. After the dispersion, the solvent is removed by filtration or evaporation under reduced pressure. After the removal of the solvent, it is preferred that baking be further performed at 100°C or more.

Additives may be further incorporated into the undercoat layer. For example, known materials including metal particles such as aluminum particles, electroconductive particles such as carbon black, a charge transporting substance, a metal chelate compound, and an organometallic compound may be incorporated.

The undercoat layer may be formed by: preparing a coating liquid for an undercoat layer containing the above-mentioned respective materials and a solvent; forming a coat thereof on the support or the electroconductive layer; and drying and/or curing the coat.

Examples of the solvent to be used in the coating liquid for an undercoat layer include organic solvents, such as an alcohol, a sulfoxide, a ketone, an ether, an ester, an aliphatic halogenated hydrocarbon, and an aromatic compound. In the present disclosure, an alcohol-based solvent or a ketone-based solvent is preferably used.

Examples of a dispersion method for preparing the coating liquid for an undercoat layer include methods including using a homogenizer, an ultrasonic disperser, a ball mill, a sand mill, a roll mill, a vibration mill, an attritor, and a liquid collision-type high-speed disperser.

The thickness of the undercoat layer is preferably 0.1 $\mu$m or more and 50 $\mu$m or less.

<Charge Generating Layer>

The charge generating layer preferably contains a charge generating substance and a binder resin.

Examples of the charge generating substance include azo pigments, perylene pigments, polycyclic quinone pigments, indigo pigments, and phthalocyanine pigments. Of those, azo pigments and phthalocyanine pigments are preferred. Of the phthalocyanine pigments, a titanyl phthalocyanine pigment, an oxytitanium phthalocyanine pigment, a chlorogallium phthalocyanine pigment, and a hydroxygallium phthalocyanine pigment are preferred.

Examples of the binder resin include a polyester resin, a polycarbonate resin, a polyvinyl acetal resin, a polyvinyl butyral resin, an acrylic resin, a silicone resin, an epoxy resin, a melamine resin, a polyurethane resin, a phenol resin, a polyvinyl alcohol resin, a cellulose resin, a polystyrene resin, a polyvinyl acetate resin, and a polyvinyl chloride resin. Of those, a polyvinyl butyral resin is preferred.

In addition, the charge generating layer may further contain an additive, such as an antioxidant or a UV absorber. Specific examples thereof include a hindered phenol compound, a hindered amine compound, a sulfur compound, a phosphorus compound, and a benzophenone compound.

The charge generating layer may be formed by: preparing a coating liquid for a charge generating layer containing the above-mentioned respective materials and a solvent; forming a coat thereof on the undercoat layer; and drying the coat. Examples of the solvent to be used in the coating liquid include an alcohol-based solvent, a sulfoxide-based solvent, a ketone-based solvent, an ether-based solvent, an ester-based solvent, and an aromatic hydrocarbon-based solvent.

The thickness of the charge generating layer is preferably 0.01 μm or more and 5 μm or less, more preferably 0.05 μm or more and 2 μm or less.

<Charge Transporting Layer (Surface Layer)>

In one embodiment of the present disclosure, the electrophotographic photosensitive member includes a charge transporting layer as a surface layer. In this embodiment, the charge transporting layer (surface layer) of the electrophotographic photosensitive member contains a charge transporting substance, a binder resin, and silicone resin particles.

In this embodiment, the charge transporting layer (surface layer) of the electrophotographic photosensitive member contains a compound represented by the formula (1) as the charge transporting substance.

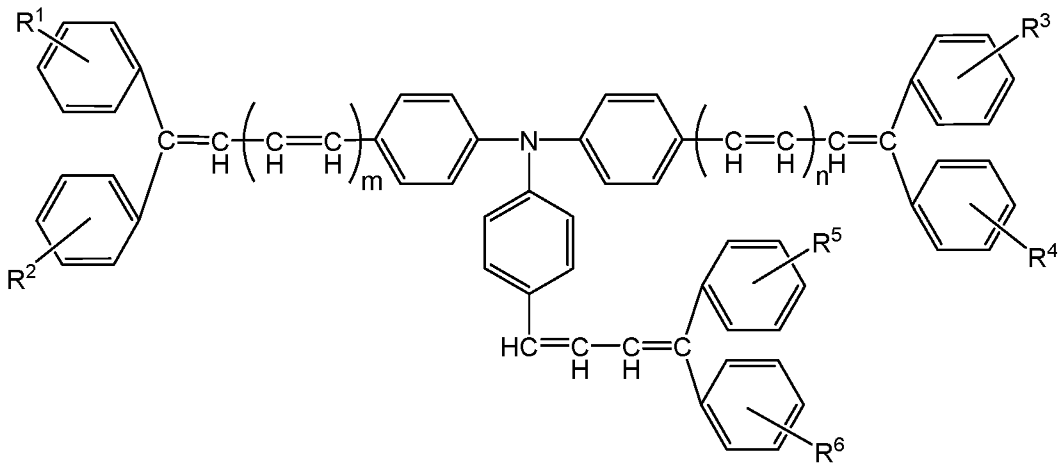

(1)

In the formula (1), $R^1$, $R^2$, $R^3$, $R^4$, $R^5$, and $R^6$ each independently represent a hydrogen atom, a halogen atom, a substituted or unsubstituted alkyl group having 1 or more and 20 or less carbon atoms, a substituted or unsubstituted alkoxy group having 1 or more and 20 or less carbon atoms, or a substituted or unsubstituted aryl group having 6 or more and 30 or less carbon atoms, or $R^1$ and $R^2$, $R^3$ and $R^4$, and $R^5$ and $R^6$ are each independently bonded to each other to form a hydrocarbon ring structure. That is, at least one of a combination of $R^1$ and $R^2$, a combination of $R^3$ and $R^4$, or a combination of $R^5$ and $R^6$ may be bonded to each other to form a hydrocarbon ring structure. "n" and "m" each independently represent 1 or 2.

In the formula (1), examples of the halogen atom represented by each of $R^1$ to $R^6$ include fluorine, chlorine, bromine, and iodine, and of those, fluorine and chlorine are desired. In the formula (1), examples of the alkyl group represented by each of $R^1$ to $R^6$ include straight-chain groups, such as a methyl group, an ethyl group, a propyl group, a butyl group, an octyl group, and an octadecyl group, and branched-chain groups, such as an isopropyl group and a t-butyl group, and of those, a methyl group, an ethyl group, and an isopropyl group are desired. In the formula (1), examples of the alkoxy group represented by each of $R^1$ to $R^6$ include a methoxy group and an ethoxy group, and of those, a methoxy group is desired. In the formula (1), examples of the aryl group represented by each of $R^1$ to $R^6$ include a phenyl group, a naphthyl group, a phenanthryl group, and a biphenylyl group, and of those, a phenyl group and a naphthyl group are desired. The alkyl group, the alkoxy group, or the aryl group represented by each of $R^1$ to $R^6$ may further have a substituent, and examples of the substituent include the halogen atom, the alkoxy group, the alkyl group, and the aryl group described above as examples. Examples of groups (structures) formed by linking $R^1$ and $R^2$, $R^3$ and $R^4$, and $R^5$ and $R^6$ to each other in the hydrocarbon ring structures formed by linking the group represented by $R^1$ and the group represented by $R^2$, the group represented by $R^3$ and the group represented by $R^4$, and the group represented by $R^5$ and the group represented by $R^6$ to each other include a single bond, a 2,2'-methylene group, a 2,2'-ethylene group, and a 2,2'-vinylene group, and of those, a single bond and a 2,2'-methylene group are desired. In the formula (1), it is desired that $R^1$ to $R^6$ each independently represent a hydrogen atom or a methyl group out of the above-mentioned groups (structures).

The compound represented by the formula (1) is a compound that is generally called a butadiene-based compound having a butadiene trimer structure in a molecule thereof.

Specific examples of the compound represented by the formula (1) in the present disclosure are shown in Table 1 below.

Table 1

| Exemplary compound No. | n | m | $R^1$ | $R^2$ | $R^3$ | $R^4$ | $R^5$ | $R^6$ |
|---|---|---|---|---|---|---|---|---|
| 1-1 | 1 | 1 | H | H | H | H | H | H |
| 1-2 | 2 | 2 | H | H | H | H | H | H |
| 1-3 | 1 | 1 | 4-Me | 4-Me | 4-Me | H | H | H |
| 1-4 | 2 | 2 | H | H | H | H | 4-Me | 4-Me |
| 1-5 | 1 | 1 | 4-Me | 4-Me | 4-Me | 4-Me | 4-Me | 4-Me |
| 1-6 | 1 | 1 | 4-Me | 4-Me | H | H | 4-Me | 4-Me |
| 1-7 | 1 | 1 | H | H | 4-Me | 4-Me | H | H |
| 1-8 | 1 | 1 | H | H | 3-Me | 3-Me | H | H |
| 1-9 | 1 | 1 | 4-Me | H | H | H | 4-Me | H |
| 1-10 | 1 | 1 | 4-MeO | H | H | H | 4-MeO | H |
| 1-11 | 1 | 1 | H | H | 4-MeO | 4-MeO | H | H |
| 1-12 | 1 | 1 | 4-MeO | H | 4-MeO | H | 4-MeO | 4-MeO |
| 1-13 | 1 | 1 | 3-Me | H | 3-Me | H | 3-Me | H |

The content of the compound represented by the formula (1) is preferably 5 mass% or more and 50 mass% or less, more preferably 10 mass% or more and 40 mass% or less with respect to the total amount of a solid content of the surface layer (charge transporting layer in this embodiment).

The surface layer (charge transporting layer in this embodiment) may contain, as other charge transporting substances, for example, a polycyclic aromatic compound, a heterocyclic compound, a hydrazone compound, a styryl compound, a benzidine compound, and resins having groups derived from those substances. Those other charge transporting substances may be used alone or in combination thereof.

A thermoplastic resin (hereinafter also referred to as "resin") is used as the binder resin.

Examples of the thermoplastic resin include a polyester resin, a polycarbonate resin, an acrylic resin, and a polystyrene resin. Of those, a polycarbonate resin and a polyester resin are preferred.

A content ratio (mass ratio) between the charge transporting substance and the resin is preferably from 10:1 to 1:5.

The silicone resin particles are added for the purpose of suppressing the change in sensitivity of the butadiene-based compound caused by moisture described above.

Commercially available silicone resin particles that may be used in the present disclosure are, for example, silicone resin particles available under the product names "X-52-854", "X-52-1621", and "KMP-590" from Shin-Etsu Chemical Co., Ltd., and silicone resin particles available under the product names "MSP-N050" and "MSP-N080" from Nikko Rica Corporation.

The content of the silicone resin particles in the surface layer (in the charge transporting layer in this embodiment) is preferably 10 mass% or more and 100 mass% or less with respect to the content of the compound represented by the formula (1) in the surface layer (in the charge transporting layer in this embodiment). When the content is 10 mass% or more, a pattern memory is easily suppressed. When the content is 100 mass% or less, potential fluctuation at the time of repeated use is easily suppressed.

The number-average primary particle diameter of the silicone resin particles is preferably 500 nm or more and 2,000 nm or less. When the number-average primary particle diameter is 500 nm or more, a pattern memory is easily suppressed. When the number-average primary particle diameter is 2,000 nm or less, potential fluctuation at the time of repeated use is easily suppressed.

The number-average primary particle diameter of the silicone resin particles to be incorporated into the surface layer is determined from the cross-section of the surface layer. Specifically, 50 silicone resin particles in the cross-section of the surface layer are observed, and an image is obtained. Each longest diameter is determined by subjecting the image to ellipse fitting. An average of the 10 longest diameters from longest among the determined longest diameters is defined as the number-average primary particle diameter of the silicone resin particles.

In addition, the surface layer (charge transporting layer in this embodiment) may contain various additives, such

as an antioxidant, a UV absorber, a plasticizer, and a leveling agent. Specific examples thereof include a hindered phenol compound, a hindered amine compound, a sulfur compound, a phosphorus compound, a benzophenone compound, a siloxane-modified resin, a silicone oil, polystyrene resin particles, polyethylene resin particles, and boron nitride particles.

The surface layer (charge transporting layer in this embodiment) may be formed by: preparing a coating liquid for a surface layer containing the above-mentioned respective materials and a solvent; forming a coat thereof on, for example, the charge generating layer; and drying the coat. Examples of the solvent to be used in the coating liquid include an alcohol-based solvent, a ketone-based solvent, an ether-based solvent, an ester-based solvent, and an aromatic hydrocarbon-based solvent. Of those solvents, an ether-based solvent or an aromatic hydrocarbon-based solvent is preferred.

The thickness of the surface layer is preferably 5 μm or more and 50 μm or less, more preferably 8 μm or more and 40 μm or less.

[Toner and Developer]

The toner to be used in each of the electrophotographic apparatus according to the present disclosure and the process cartridge according to the present disclosure is a toner including toner particles each containing a polyester resin having a polyethylene terephthalate segment.

The toner according to the present disclosure is described below.

<Polyester Resin having Polyethylene Terephthalate Segment>

The structure of the polyester resin to be incorporated into the toner in the present disclosure has a structure of polyethylene terephthalate. Examples of a component for forming the polyester resin having a polyethylene terephthalate segment include a polyethylene terephthalate segment, dihydric or higher alcohol monomer components, and acid monomer components, such as divalent or higher carboxylic acids, divalent or higher carboxylic acid anhydrides, and divalent or higher carboxylic acid esters.

<Polyethylene Terephthalate Segment>

The polyethylene terephthalate segment of the present disclosure has a structure in which ($C_{10}H_8O_4$), which is a structural unit of polyethylene terephthalate, is repeated.

As the polyethylene terephthalate segment of the present disclosure, a polyethylene terephthalate segment that is produced by a condensation reaction or a transesterification reaction between ethylene glycol and terephthalic acid, dimethyl terephthalate, or the like in accordance with an ordinary method may be used. In addition, a recovered polyethylene terephthalate resin may also be used.

The polyethylene terephthalate resin is used in various products, such as a container and a film, and it is preferred that the polyethylene terephthalate resin be recovered to be reused from the viewpoint of environmental protection. The kind of the recovered polyethylene terephthalate resin is not limited as long as the resin has an appropriate level of purity without containing impurities that influence toner characteristics and reactions in a production process.

<Dihydric or Higher Alcohol Monomer Component>

Examples of the dihydric or higher alcohol monomer component include: alkylene oxide adducts of bisphenol A, such as polyoxypropylene(2.2)-2,2-bis(4-hydroxyphenyl)propane, polyoxypropylene(3.3)-2,2-bis(4-hydroxyphenyl)propane, polyoxyethylene(2.0)-2,2-bis(4-hydroxyphenyl)propane, polyoxypropylene(2.0)-polyoxyethylene(2.0)-2,2-bis(4-hydroxyphenyl)propane, and polyoxypropylene(6)-2,2-bis(4-hydroxyphenyl)propane; and ethylene glycol, 1,2-propylene glycol, 1,4-butanediol, neopentyl glycol, polyethylene glycol, and polypropylene glycol.

<Acid Monomer Component>

Meanwhile, examples of the acid monomer component, such as a divalent or higher carboxylic acid, a divalent or higher carboxylic acid anhydride, and a divalent or higher carboxylic acid ester, include: aromatic dicarboxylic acids, such as phthalic acid, isophthalic acid, and terephthalic acid, or anhydrides thereof; and alkyl dicarboxylic acids, such as oxalic acid, malonic acid, succinic acid, adipic acid, maleic acid, fumaric acid, citraconic acid, and itaconic acid, or anhydrides thereof.

<Production Method for Polyester Resin having Polyethylene Terephthalate Segment>

The polyester resin having a polyethylene terephthalate segment of the present disclosure may be produced in

accordance with an ordinary polyester synthesis method. For example, a desired polyester resin may be obtained by subjecting a carboxylic acid monomer and an alcohol monomer to an esterification reaction or a transesterification reaction, and then subjecting the resultant to a polycondensation reaction in accordance with an ordinary method under reduced pressure or while introducing a nitrogen gas.

<Amorphous Resin A, Crystalline Polyester Resin C, and Phosphorus Compound>

Further, it is more preferred that the following toner be used because low-temperature fixability and scratch resistance can be improved.

A toner including toner particles each containing a binder resin, wherein the binder resin contains an amorphous resin A and a crystalline polyester resin C, wherein the amorphous resin A is a polyester resin, and the amorphous resin A has, as structures for forming a polyester backbone,

(i) a polyethylene terephthalate segment, and
(ii) at least one structure selected from the group consisting of: a structure represented by the following formula (2); a structure represented by the following formula (3); a structure represented by the following formula (4); and a structure represented by the following formula (5):

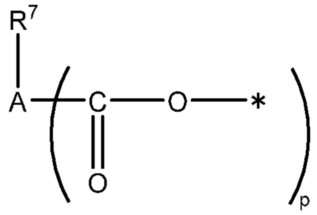

(2)

in the formula (2), $R^7$ represents an alkyl group having 6 to 16 carbon atoms or an alkenyl group having 6 to 16 carbon atoms, A represents a hydrocarbon group, "*" represents a bonding site in the polyester backbone, and "p" represents an integer of 2 or more;

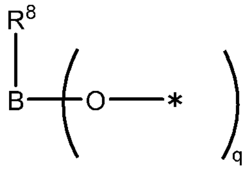

(3)

in the formula (3), $R^8$ represents an alkyl group having 6 to 16 carbon atoms or an alkenyl group having 6 to 16 carbon atoms, B represents a hydrocarbon group, "*" represents a bonding site in the polyester backbone, and "q" represents an integer of 2 or more;

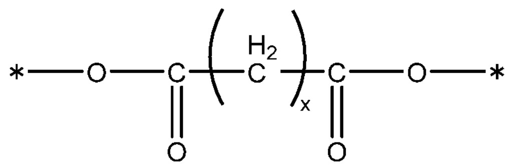

(4)

in the formula (4), "*" represents a bonding site in the polyester backbone, and "x" represents an integer of from 6 to 16,

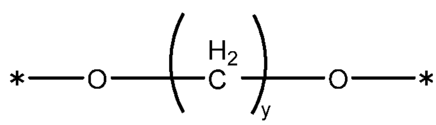

(5)

in the formula (5), "*" represents a bonding site in the polyester backbone, and "y" represents an integer of from 6 to 16, wherein, when an SP value of the amorphous resin A is represented by $SP_A$ $(cal/cm^3)^{0.5}$, and an SP value of the crystalline polyester resin C is represented by SPc $(cal/cm^3)^{0.5}$, the $SP_A$ and the SPc satisfy the following formula (C):

$$1.00 \leq SP_A - SP_C \leq 1.35 \cdots (C),$$

wherein the toner contains a phosphorus element derived from a phosphorus compound, and wherein, when a content of the phosphorus element in the toner based on a mass of the toner is represented by $W_P$ (mass ppm), the $W_P$ satisfies the following formula (D):

$$5 \leq W_P \leq 500 \cdots (D).$$

In addition, the $W_P$ may satisfy the following formula (E):

$$20 \leq W_P \leq 500 \cdots (E).$$

The reason for the improvement of low-temperature fixability and scratch resistance is described below.

The inventors have made investigations, and as a result, have found that the toner having such characteristics as described below improves scratch resistance while exhibiting satisfactory low-temperature fixability.

(i) A three-dimensional structure can be flexibly deformed in a direction in which external force is applied.
(ii) When the external force is removed, an original three-dimensional structure can be recovered.

Such toner can be achieved by the above-mentioned configuration.

The amorphous resin A in the present disclosure has at least one structure selected from the group consisting of: the structure represented by the formula (2); the structure represented by the formula (3); the structure represented by the formula (4); and the structure represented by the formula (5), and the SP values of the amorphous resin A and the crystalline polyester resin C are controlled. As a result, the amorphous resin A has affinity for the crystalline polyester resin C. Thus, in a fixed image, the amorphous resin A is influenced by the crystalline polyester resin C to become flexible. In addition, this structure disperses the applied external force, and hence the three-dimensional structure can be flexibly deformed in the direction in which the external force is applied without a molecular chain being broken.

In addition, the amorphous resin A contains a polyethylene terephthalate segment and hence has a repeating structure of a condensate of terephthalic acid and ethylene glycol in a polyester backbone. In the structure derived from the ethylene glycol of the polyethylene terephthalate segment, both terminals of the ethylene glycol are subjected to an esterification reaction, and hence the structure has ester groups at a significantly close molecular distance corresponding to two carbon atoms. Thus, the amorphous resin A has ester groups localized in the resin.

In addition, the phosphorus compound in which three unshared electron pairs in an outermost shell are caused to react also has bonding points at a significantly close molecular distance. As a result, the amorphous resin A can interact with the ester groups localized in the amorphous resin A around phosphorus elements of the phosphorus compound to form a three-dimensional crosslinked structure. By virtue of the presence of this structure, when the applied external force is removed, the deformed state can be returned to the original three-dimensional structure. As described above, it is conceived that the configuration of the present disclosure enables excellent low-temperature fixability and scratch resistance to be obtained.

The amorphous resin A of the present disclosure has at least one structure selected from the group consisting of: the structure represented by the formula (2); the structure represented by the formula (3); the structure represented by the formula (4); and the structure represented by the formula (5) as a structure for forming the polyester backbone. The structure of a long-chain hydrocarbon group, such as an alkyl group or an alkenyl group, in each of the above-mentioned structures becomes a structure having relatively low polarity as compared to the above-mentioned structure derived from the ethylene glycol of the polyethylene terephthalate segment. As a result, the structure of the long-chain hydrocarbon group, such as an alkyl group or an alkenyl group, in each of the structures becomes flexible when the affinity for the crystalline polyester resin C is increased. In addition, this structure disperses the applied external force, and hence the three-dimensional structure can be flexibly deformed in the direction in which the external force is applied without a molecular chain being broken. As a result, the improvement of elastic deformation is achieved to provide excellent scratch resistance.

In addition, the $SP_A$ $(cal/cm^3)^{0.5}$ of the amorphous resin A and the SPc $(cal/cm^3)^{0.5}$ of the crystalline polyester resin C in the present disclosure satisfy the formula (C). When $SP_A$-$SP_C$ satisfies the formula (C), the amorphous resin A and the crystalline polyester resin C easily become compatible, and hence the crystalline polyester resin C can smoothly work on the structure of the amorphous resin A having a long-chain hydrocarbon group, such as an alkyl group or an alkenyl group. As a result, this structure becomes flexible when the affinity for the crystalline polyester resin C is increased. In addition, this structure disperses the applied external force, and hence the three-dimensional structure can be flexibly deformed in the direction in which the external force is applied without a molecular chain being broken. As a result, the

improvement of an elastic deformation characteristic is achieved to provide excellent scratch resistance.

Further, the toner of the present disclosure contains phosphorus elements derived from the phosphorus compound, and $W_P$ (mass ppm) satisfies the formula (D). When the content of the phosphorus elements in the toner satisfies the formula (D), this case indicates that the phosphorus elements are present in an amount sufficient for an interaction with the ester groups localized in the amorphous resin A around the phosphorus elements to form a three-dimensional crosslinked structure. That is, the above-mentioned content allows the applied external force to be dispersed, and hence corresponds to the minimum amount of the phosphorus elements that can flexibly change the three-dimensional structure in the direction in which the external force is applied without breakage of the molecular chain and the maximum amount of the phosphorus elements that can ensure a certain degree of plastic deformation capable of ensuring low-temperature fixability.

<Amorphous Resin A>

The amorphous resin A is a polyester resin that has the following (i) and (ii) as structures for forming the polyester backbone:

(i) a polyethylene terephthalate segment; and
(ii) at least one structure selected from the group consisting of: the structure represented by the formula (2); the structure represented by the formula (3); the structure represented by the formula (4); and the structure represented by the formula (5).

The polyethylene terephthalate structure to be used in the amorphous resin A is obtained by subjecting ethylene glycol and terephthalic acid to polycondensation.

In addition, the synthesis of the amorphous resin A may be performed in an inert gas atmosphere, preferably in the presence of an esterification catalyst, and further as required, in the presence of an esterification promoter, a polymerization inhibitor, and the like, preferably at a temperature of 180°C or more and 250°C or less.

Examples of the esterification catalyst include a tin compound, such as dibutyltin oxide or tin(II) 2-ethylhexanoate, and a titanium compound such as titanium diisopropylate bistriethanolaminate. Of those, a tin compound such as tin(II) 2-ethylhexanoate is preferred. The usage amount of the esterification catalyst is preferably 0.01 part by mass or more, more preferably 0.1 part by mass or more and preferably 1.5 parts by mass or less, more preferably 1.0 part by mass or less with respect to 100 parts by mass of the raw material monomers (an alcohol component, a carboxylic acid component, and PET). An example of the esterification promoter is gallic acid. The usage amount of the esterification promoter is preferably 0.001 part by mass or more, more preferably 0.01 part by mass or more and preferably 0.5 part by mass or less, more preferably 0.1 part by mass or less with respect to 100 parts by mass of the raw material monomers. An example of the polymerization inhibitor is tert-butyl catechol. The usage amount of the polymerization inhibitor is preferably 0.001 part by mass or more, more preferably 0.01 part by mass or more and preferably 0.5 part by mass or less, more preferably 0.1 part by mass or less with respect to 100 parts by mass of the raw material monomers.

In addition, in the synthesis of the amorphous resin A, the polyethylene terephthalate may be allowed to be present from the start of the polycondensation reaction, or may be added to the reaction system during the polycondensation reaction. In order for a polyethylene terephthalate structure moiety to be incorporated into the main backbone of the amorphous resin A in a block form to a certain extent, the timing of the addition of the polyethylene terephthalate is preferably in a stage in which the reaction rate of the alcohol component and the carboxylic acid component is 10% or less, more preferably in a stage in which the reaction rate is 5% or less. Here, the reaction rate refers to the value of generated reaction water amount (mol)/theoretical generated water amount (mol)$\times$100.

In addition, as the polyethylene terephthalate segment to be incorporated into the amorphous resin A, spent polyethylene terephthalate (so-called regenerated PET) may be used. It is preferred that the polyethylene terephthalate be reused from the viewpoint of the environment.

The spent PET is recovered. The recovered PET is washed and sorted so as to be prevented from being mixed with other materials and dust. After a label and the like are removed, the resultant is pulverized into flakes or the like. The pulverized product may be used as it is, or the pulverized product, which is kneaded and coarsely pulverized, may also be used. When the chemical substances adsorbed to the surface of a PET bottle cannot be sufficiently removed by ordinary washing, alkali washing may be performed. When part of the pulverized product is hydrolyzed by the alkali washing, it is preferred that the washed pulverized product, which is melted and pelletized, be subjected to solid-phase polymerization in order to restore the reduced polymerization degree. The solid-phase polymerization step may be performed by subjecting the washed flakes or the flakes, which are melted and extruded into pellets, to continuous solid-phase polymerization in an inert gas, such as a nitrogen gas or a noble gas, at a temperature of from 180°C to 245°C, preferably from 200°C to 240°C. In addition, the washed pulverized product, which is decomposed to a monomer unit by depolymerization and resynthesized, may also be used. In addition, the regenerated PET is not limited to the above-mentioned spent PET, and fiber scraps or pellets of off-spec PET discharged from factories may also be used.

In addition, in order to incorporate at least one structure selected from the group consisting of: the structure represented by the formula (2); the structure represented by the formula (3); the structure represented by the formula (4); and the structure represented by the formula (5) into the amorphous resin A, the following monomers may be used. Examples thereof include 1,6-hexanediol, 1,7-heptanediol, 1,8-octanediol, 1,9-nonanediol, 1,10-decanediol, 1,11-undecanediol, 1,12-dodecanediol, suberic acid, azelaic acid, sebacic acid, undecanedioic acid, dodecanedioic acid, tetradecanedioic acid, hexadecanedioic acid, octadecanedioic acid, dodecenylsuccinic acid, n-octylsuccinic acid, isododecenylsuccinic acid, dodecylsuccinic acid, isooctenylsuccinic acid, and hexadecylsuccinic acid.

The amorphous resin A preferably contains the structure represented by the formula (2) or the structure represented by the formula (3) out of the above-mentioned respective structures. The alkyl group or alkenyl group having 6 to 16 carbon atoms is branched from the main chain of the polyester backbone. Thus, the affinity for a release agent is enhanced, and the dispersibility of the release agent is further enhanced.

In addition, as a component for obtaining the amorphous resin A, other polyhydric alcohols (dihydric or higher alcohols) or polyvalent carboxylic acids (divalent or higher carboxylic acids), and acid anhydrides or lower alkyl esters thereof may each be used in addition to the above-mentioned structures and monomers.

The following polyhydric alcohol monomers may each be used as a polyhydric alcohol monomer. As a dihydric alcohol component, there are given, for example: ethylene glycol, propylene glycol, 1,3-butanediol, 1,4-butanediol, 2,3-butanediol, diethylene glycol, triethylene glycol, neopentyl glycol, 2-ethyl-1,3-hexanediol, hydrogenated bisphenol A, a bisphenol represented by the following formula (A) and derivatives thereof, and diols each represented by the following formula (B).

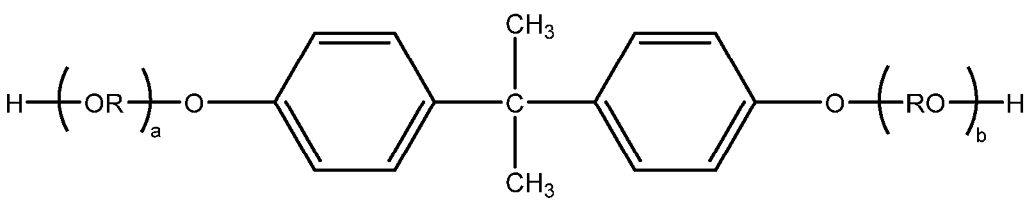

(A)

In the formula (A), R represents an ethylene group or a propylene group, "a" and "b" each represent an integer of 0 or more, and the average of a+b is 0 or more and 10 or less.

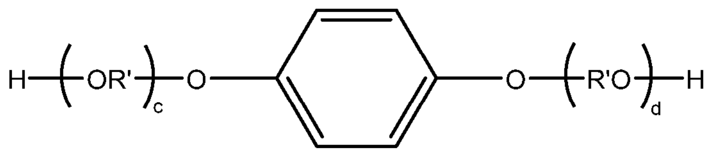

(B)

In the formula (B), R' represents an ethylene group, $-CH_2CH(CH_3)-$ or $-CH_2C(CH_3)_2-$, "c" and "d" each represent an integer of 0 or more, and the average of c+d is 0 or more and 10 or less.

As a trihydric or higher alcohol component, there are given, for example, sorbitol, 1,2,3,6-hexanetetrol, 1,4-sorbitan, pentaerythritol, dipentaerythritol, tripentaerythritol, 1,2,4-butanetriol, 1,2,5-pentanetriol, glycerol, 2-methylpropanetriol, 2-methyl-1,2,4-butanetriol, trimethylolethane, trimethylolpropane, and 1,3,5-trihydroxymethylbenzene. Of those, glycerol, trimethylolpropane, and pentaerythritol are preferably used.

Those dihydric alcohols and trihydric or higher alcohols may be used alone or in combination thereof.

As a divalent carboxylic acid component, there are given, for example, maleic acid, fumaric acid, citraconic acid, itaconic acid, glutaconic acid, phthalic acid, isophthalic acid, terephthalic acid, succinic acid, azelaic acid, malonic acid, and anhydrides of those acids and lower alkyl esters thereof. Of those, maleic acid, fumaric acid, and terephthalic acid are preferably used.

As a trivalent or higher carboxylic acid, an acid anhydride thereof, or a lower alkyl ester thereof, there are given, for example, 1,2,4-benzenetricarboxylic acid, 2,5,7-naphthalenetricarboxylic acid, 1,2,4-naphthalenetricarboxylic acid, 1,2,4-butanetricarboxylic acid, 1,2,5-hexanetricarboxylic acid, 1,3-dicarboxyl-2-methyl-2-methylenecarboxypropane, 1,2,4-cyclohexanetricarboxylic acid, tetra(methylenecarboxyl)methane, 1,2,7,8-octanetetracarboxylic acid, pyromellitic acid, EMPOL trimer acid, and acid anhydrides thereof or lower alkyl esters thereof. Of those, 1,2,4-benzenetricarboxylic acid, that is, trimellitic acid or a derivative thereof is particularly preferably used because trimellitic acid or the derivative thereof is available at low cost and its reaction can be easily controlled. Those divalent carboxylic acids and trivalent or higher carboxylic acids may be used alone or in combination thereof.

A method of producing the amorphous resin A is not particularly limited, and a known method may be used. For example, the amorphous resin A is produced by simultaneously loading the above-mentioned alcohol monomer and

carboxylic acid monomer and then polymerizing the mixture through an esterification reaction or a transesterification reaction and a condensation reaction. In addition, the polymerization temperature is not particularly limited, but a range of 180°C or more and 290°C or less is preferred. In the polymerization of a polyester unit, a polymerization catalyst, such as a titanium-based catalyst, a tin-based catalyst, zinc acetate, antimony trioxide, or germanium dioxide, may be used. In particular, the amorphous resin A is more preferably a polyester resin polymerized through use of a tin-based catalyst.

The amorphous resin A may be a polyester resin having a vinyl-based resin portion. As a method of obtaining a polyester resin having a vinyl-based resin bonded thereto, a method including using a monomer component that may react with both the vinyl-based resin and the polyester unit is preferred. Such monomer is preferably a monomer having an unsaturated double bond and a carboxy group or a hydroxy group. Examples thereof include unsaturated dicarboxylic acids, such as phthalic acid, maleic acid, citraconic acid, and itaconic acid, or anhydrides thereof, and acrylic acid or methacrylic acid esters.

In addition, the peak molecular weight of the amorphous resin A is preferably 3,500 or more and 20,000 or less from the viewpoint of, for example, low-temperature fixability. The glass transition temperature is preferably from 40°C to 70°C.

In addition, as an amorphous resin, various resins that have hitherto been known as binder resins may each be used in combination with the amorphous resin A. Examples of such resin include a phenol resin, a natural resin-modified phenol resin, a natural resin-modified maleic resin, an acrylic resin, a methacrylic resin, a polyvinyl acetate resin, a silicone resin, a polyester resin, a polyurethane resin, a polyamide resin, a furan resin, an epoxy resin, a xylene resin, a polyvinyl butyral resin, a terpene resin, a coumarone-indene resin, and a petroleum-based resin.

<Crystalline Polyester Resin C>

A polyhydric alcohol (dihydric or trihydric or higher alcohol), and a polyvalent carboxylic acid (divalent or trivalent or higher carboxylic acid), an acid anhydride thereof, or a lower alkyl ester thereof are used as the monomers to be used for the polyester unit of the crystalline polyester resin C to be used in the toner of the present disclosure.

The following polyhydric alcohol monomers may each be used as a polyhydric alcohol monomer to be used for the polyester unit of the crystalline polyester resin C.

The polyhydric alcohol monomer is not particularly limited, but is preferably a chain (more preferably straight-chain) aliphatic diol. Examples thereof include ethylene glycol, diethylene glycol, triethylene glycol, 1,2-propylene glycol, 1,3-propylene glycol, 1,6-hexanediol, dipropylene glycol, 1,4-butanediol, 1,4-butadiene glycol, trimethylene glycol, tetramethylene glycol, pentamethylene glycol, hexamethylene glycol, octamethylene glycol, nonamethylene glycol, decamethylene glycol, and neopentyl glycol. Of those, straight-chain aliphatic $\alpha,\omega$-diols, such as ethylene glycol, diethylene glycol, 1,4-butanediol, and 1,6-hexanediol, are particularly preferred examples.

In the present disclosure, a polyhydric alcohol monomer except the above-mentioned polyhydric alcohols may also be used. Examples of a dihydric alcohol monomer out of the polyhydric alcohol monomers include: an aromatic alcohol, such as polyoxyethylenated bisphenol A or polyoxypropylenated bisphenol A; and 1,4-cyclohexanedimethanol. In addition, examples of a trihydric or higher polyhydric alcohol monomer out of the polyhydric alcohol monomers include: an aromatic alcohol such as 1,3,5-trihydroxymethylbenzene; and an aliphatic alcohol, such as pentaerythritol, dipentaerythritol, tripentaerythritol, 1,2,4-butanetriol, 1,2,5-pentanetriol, glycerin, 2-methylpropanetriol, 2-methyl-1,2,4-butanetriol, trimethylolethane, or trimethylolpropane.

The following polyvalent carboxylic acid monomers may each be used as a polyvalent carboxylic acid monomer to be used for the polyester unit of the crystalline polyester resin C.

The polyvalent carboxylic acid monomer is not particularly limited, but is preferably a chain (more preferably straight-chain) aliphatic dicarboxylic acid. Specific examples thereof include: oxalic acid, malonic acid, succinic acid, glutaric acid, adipic acid, pimelic acid, suberic acid, glutaconic acid, azelaic acid, sebacic acid, nonanedicarboxylic acid, decanedicarboxylic acid, undecanedicarboxylic acid, dodecanedicarboxylic acid, maleic acid, fumaric acid, mesaconic acid, citraconic acid, and itaconic acid; and products obtained by hydrolyzing acid anhydrides or lower alkyl esters thereof.

In the present disclosure, a polyvalent carboxylic acid except the above-mentioned polyvalent carboxylic acid monomers may also be used. Examples of a divalent carboxylic acid out of the other polyvalent carboxylic acid monomers include: an aromatic carboxylic acid, such as isophthalic acid or terephthalic acid; an aliphatic carboxylic acid, such as n-dodecylsuccinic acid or n-dodecenylsuccinic acid; an alicyclic carboxylic acid such as cyclohexanedicarboxylic acid; and acid anhydrides or lower alkyl esters thereof. In addition, examples of a trivalent or higher polyvalent carboxylic acid out of the other carboxylic acid monomers include: an aromatic carboxylic acid, such as 1,2,4-benzenetricarboxylic acid (trimellitic acid), 2,5,7-naphthalenetricarboxylic acid, 1,2,4-naphthalenetricarboxylic acid, or pyromellitic acid; an aliphatic carboxylic acid, such as 1,2,4-butanetricarboxylic acid, 1,2,5-hexanetricarboxylic acid, or 1,3-dicarboxy-2-methyl-2-methylenecarboxypropane; and derivatives, such as acid anhydrides or lower alkyl esters, thereof.

In addition, the crystalline polyester resin C is preferably a modified crystalline polyester resin having a structure in which a hydroxy group at a main chain terminal is terminally modified with an aliphatic monocarboxylic acid having 16 to

31 carbon atoms, or a modified crystalline polyester resin having a structure in which a carboxy group at a main chain terminal is terminally modified with an aliphatic monoalcohol having 15 to 30 carbon atoms.

Examples of the aliphatic monocarboxylic acid monomer having 16 to 31 carbon atoms include palmitic acid (hexadecanoic acid), margaric acid (heptadecanoic acid), stearic acid (octadecanoic acid), nonadecylic acid, arachidic acid (icosanoic acid), henicosanoic acid, docosanoic acid, tetracosanoic acid, hexacosanoic acid, octacosanoic acid, and triacontanoic acid.

Examples of the aliphatic monoalcohol having 15 to 30 carbon atoms include cetyl alcohol, palmityl alcohol (hexadecanol), margaryl alcohol (heptadecanol), stearyl alcohol (octadecanol), nonadecanol, arachidyl alcohol (icosanol), heneicosanol, behenyl alcohol, lignoceryl alcohol, ceryl alcohol, 1-heptacosanol, montanyl alcohol, 1-nonacosanol, and myricyl alcohol.

The crystalline polyester resin C may be produced in accordance with an ordinary polyester synthesis method. For example, the crystalline polyester resin may be obtained by: subjecting the carboxylic acid monomer and alcohol monomer described above to an esterification reaction or a transesterification reaction; and then subjecting the resultant to a polycondensation reaction in accordance with an ordinary method under reduced pressure or while introducing a nitrogen gas. After that, a desired crystalline polyester resin is obtained by further adding the above-mentioned aliphatic compound and performing an esterification reaction.

The esterification or transesterification reaction may be performed with a general esterification catalyst or transesterification catalyst, such as sulfuric acid, titanium butoxide, dibutyltin oxide, manganese acetate, or magnesium acetate, as required.

In addition, the polycondensation reaction may be performed with a known catalyst, for example, an ordinary polymerization catalyst, such as titanium butoxide, dibutyltin oxide, tin acetate, zinc acetate, tin disulfide, antimony trioxide, or germanium dioxide. A polymerization temperature and a catalyst amount are not particularly limited, and may be appropriately determined.

In the esterification or transesterification reaction, or the polycondensation reaction, the following method may be used: all the monomers are collectively loaded in order to improve the strength of the crystalline polyester resin to be obtained. In addition, for example, the following method may be used: the divalent monomers are caused to react with each other first, and then a monomer that is trivalent or more is added to, and caused to react with, the resultant, in order to reduce the amount of a low-molecular weight component.

The melting point of the crystalline polyester resin C is preferably from 70°C to 110°C, more preferably from 80°C to 100°C from the viewpoint of low-temperature fixability. In the toner of the present disclosure, it is preferred that the crystalline polyester resin C be used in an amount of from 3 parts by mass or more and 20 parts by mass or less with respect to 100 parts by mass of the amorphous resin from the viewpoints of low-temperature fixability, scratch resistance, and a chargeability maintaining property under a high-temperature and high-humidity environment.

<Phosphorus Compound>

Examples of the phosphorus compound to be used for the toner of the present disclosure include trisodium phosphate, trimethyl phosphate, triethyl phosphate, tri-2-ethylhexyl phosphate, tris(isopropylphenyl) phosphate, triphenyl phosphate, tributyl phosphate, trimethyl phosphite, tributyl phosphite, and triphenyl phosphite. Of those, a trivalent phosphorus compound that easily forms a three-dimensional crosslink is preferred.

The optimal $W_P$ for forming a three-dimensional crosslinked structure is as described above. Further, when the toner contains spent polyethylene terephthalate (so-called regenerated PET), the block of polyethylene terephthalate is easily formed, and hence the ester groups at a close molecular distance can be more easily assembled to form a strong three-dimensional crosslinked structure. This structure can be returned to an original three-dimensional structure when the applied external force is removed.

<Release Agent>

The toner particles may each contain a wax as a release agent. Examples of the wax include a polyethylene wax, a polypropylene wax, a polypropylene copolymer wax, a microcrystalline wax, a paraffin wax, a Fischer-Tropsch wax, a carnauba wax, a rice wax, a candelilla wax, and a montan wax.

<Colorant>

The toner may include a colorant. Examples of the colorant include known organic pigments, oil-based dyes, or magnetic materials. Examples of the colorant include carbon black, Phthalocyanine Blue, Permanent Brown FG, Brilliant Fast Scarlet, Pigment Red 122, Pigment Green B, Rhodamine-B base, Solvent Red 49, Solvent Red 146, Solvent Blue 35, quinacridone, Carmine 6B, isoindoline, Disazo Yellow, Benzidine Yellow, a monoazo-based dye or pigment, and a disazo-based dye or pigment.

<Charge Control Agent>

The toner particles may each contain a charge control agent as required. When the charge control agent is blended, charge characteristics can be stabilized, and hence the optimum triboelectric charge quantity can be controlled in accordance with a developing system. Known charge control agents may each be used as the charge control agent, but in particular, a metal compound of an aromatic carboxylic acid that is colorless, can charge a toner at a high speed, and can stably hold a constant charge quantity is preferred.

As a negative charge control agent, there are given, for example: a salicylic acid metal compound; a naphthoic acid metal compound; a dicarboxylic acid metal compound; a polymer-type compound having a sulfonic acid or a carboxylic acid in a side chain thereof; a polymer-type compound having a sulfonate or a sulfonic acid esterified product in a side chain thereof; a polymer-type compound having a carboxylate or a carboxylic acid esterified product in a side chain thereof; a boron compound; a urea compound; a silicon compound; and a calixarene.

<Inorganic Fine Particles>

The toner may include inorganic fine particles as required.

The inorganic fine particles may be internally added to the toner particles or may be mixed with the toner particles as an external additive. Examples of the inorganic fine particles include fine particles, such as silica fine particles, titanium oxide fine particles, alumina fine particles, and double oxide fine particles thereof. Of the inorganic fine particles, silica fine particles and titanium oxide fine particles are preferred from the viewpoints of improving fluidity and uniformizing charge. It is preferred that the inorganic fine particles be hydrophobized with a hydrophobizing agent, such as a silane compound, a silicone oil, or a mixture thereof.

<External Additive>

In addition to the above-mentioned inorganic fine particles, organic fine particles, such as melamine-based resin fine particles and polytetrafluoroethylene resin fine particles, may be used as the external additive.

From the viewpoint of improving fluidity, the number-based median diameter ($D_{50}$) of the external additive is preferably 10 nm or more and preferably 250 nm or less, more preferably 200 nm or less, still more preferably 90 nm or less.

The content of the external additive is preferably from 0.1 part by mass to 10.0 parts by mass with respect to 100 parts by mass of the toner particles. A known mixer such as a Henschel mixer may be used in the mixing of the toner particles and the external additive.

<Developer>

The toner may be used as a one-component developer, but is preferably used as a two-component developer by being be mixed with a magnetic carrier in order to further improve dot reproducibility and to provide stable images over a long period of time.

For example, the following generally known carriers may each be used as the magnetic carrier: iron oxide; particles of metals, such as iron, lithium, calcium, magnesium, nickel, copper, zinc, cobalt, manganese, chromium, and rare earth metals, alloy particles thereof, and oxide particles thereof; a magnetic material such as ferrite; and a magnetic material-dispersed resin carrier (so-called resin carrier) containing a magnetic material and a binder resin holding the magnetic material in a dispersed state.

<Method of producing Toner Particles>

A method of producing the toner particles is not particularly limited, and known methods, such as a pulverization method, a suspension polymerization method, a dissolution suspension method, an emulsion aggregation method, and a dispersion polymerization method, may be used. Of those, a pulverization method is preferred from the viewpoint of controlling the wax on the surface of each of the toner particles. That is, the toner particles are preferably pulverized toner particles. A toner production procedure in the pulverization method is described below.

The pulverization method includes, for example: a raw material-mixing step of mixing the crystalline polyester resin C and the amorphous resin A serving as binder resins, a phosphorus compound, and other components, such as other amorphous resins, a wax, a colorant, and a charge control agent, as required; a step of melt-kneading the mixed raw materials to provide a resin composition; and a step of pulverizing the resultant resin composition to provide toner particles.

In the raw material-mixing step, predetermined amounts of, for example, the binder resin, the wax, and as

required, any other components, such as the colorant and the charge control agent, serving as constituent materials for the toner particles are weighed, and the materials are blended and mixed. An example of a mixing apparatus is a double cone mixer, a V-type mixer, a drum-type mixer, a super mixer, a Henschel mixer, a Nauta mixer, or MECHANO HYBRID (manufactured by Nippon Coke & Engineering Co., Ltd.).

Next, the mixed materials are melt-kneaded to disperse the materials in the binder resin. In the melt-kneading step, a batch-type kneader, such as a pressure kneader or a Banbury mixer, or a continuous kneader may be used, and a single-screw or twin-screw extruder has been in the mainstream because of the following superiority: the extruder can perform continuous production. Examples thereof include a KTK-type twin-screw extruder (manufactured by Kobe Steel, Ltd.), a TEM-type twin-screw extruder (manufactured by Toshiba Machine Co., Ltd.), a PCM kneader (manufactured by Ikegai Ironworks Corp.), a twin-screw extruder (manufactured by K.C.K.), a co-kneader (manufactured by Buss), and KNEADEX (manufactured by Nippon Coke & Engineering Co., Ltd.). Further, a resin composition obtained by the melt-kneading may be rolled with a twin-roll mill or the like, and may be cooled with water or the like in a cooling step.

Next, the cooled product of the resin composition is pulverized into a desired particle diameter in a pulverizing step. In the pulverizing step, the cooled product is first coarsely pulverized with a pulverizer, such as a crusher, a hammer mill, or a feather mill. Then, the cooled product is finely pulverized with, for example, KRYPTRON SYSTEM (manufactured by Kawasaki Heavy Industries, Ltd.), SUPER ROTOR (manufactured by Nisshin Engineering Inc.), TURBO MILL (manufactured by Turbo Kogyo Co., Ltd.), or a fine pulverizer based on an air jet system.

After that, as required, the finely pulverized product is classified with a classifier or a sifter, such as: ELBOW-JET (manufactured by Nittetsu Mining Co., Ltd.) based on an inertial classification system, or TURBOPLEX (manufactured by Hosokawa Micron Corporation), TSP SEPARATOR (manufactured by Hosokawa Micron Corporation), or FACULTY (manufactured by Hosokawa Micron Corporation) based on a centrifugal force classification system.

After that, the surface of the toner particle is subjected to external addition treatment with an external additive such as silica fine particles as required to provide a toner. As an apparatus for performing the external addition treatment, there is given a mixing apparatus, such as a double cone mixer, a V-type mixer, a drum-type mixer, a super mixer, a Henschel mixer, a Nauta mixer, MECHANO HYBRID (manufactured by Nippon Coke & Engineering Co., Ltd.), or NOBILTA (manufactured by Hosokawa Micron Corporation).

Methods of measuring various physical properties are described below.

(Method of separating Each Material from Toner)

Each of the materials in the toner may be separated from the toner through utilization of differences between the solubilities of the materials in the toner in solvents and GPC. The following various physical properties can be measured through use of each separated material.

First separation: The toner is dissolved in methyl ethyl ketone (MEK) at 23°C to be separated into soluble matter (the amorphous resin A, the other amorphous resins, the crystalline polyester resin C, and the phosphorus compound) and insoluble matter (the wax, the colorant, the inorganic fine particles, and the like).

Second separation: The soluble matter (the amorphous resin A, the other amorphous resin, the crystalline polyester resin C, and the phosphorus compound) obtained in the first separation is dissolved in tetrahydrofuran (THF) at 23°C to be separated into soluble matter (the amorphous resin A, the other amorphous resin, and the phosphorus compound) and insoluble matter (the crystalline polyester resin C).

Third separation: The insoluble matter (the wax, the colorant, the inorganic fine particles, and the like) obtained in the first separation is dissolved in MEK at 100°C to be separated into soluble matter (the wax) and insoluble matter (the colorant, the inorganic fine particles, and the like).

Fourth separation: The soluble matter (the amorphous resin A, the other amorphous resin, and the phosphorus compound) obtained in the second separation is dissolved in tetrahydrofuran (THF) at 23°C to be separated into the amorphous resin A, the other amorphous resin, and the phosphorus compound by preparative GPC.

<Identification of Attribution of Various Monomer Units in Amorphous Resin and Crystalline Polyester Resin, and Measurement Method for Content Ratios thereof>

The identification of attribution of various monomer units in the amorphous resin and the crystalline polyester resin and the measurement of the content ratios thereof are performed under the following conditions by $^1$H-NMR.

Measuring apparatus: FT NMR apparatus JNM-EX400 (manufactured by JEOL Ltd.)
Measurement frequency: 400 MHz
Pulse condition: 5.0 μs
Frequency range: 10,500 Hz
Number of scans: 64 times

Measurement temperature: 30°C
Sample: 50 mg of a measurement sample is loaded into a sample tube having an inner diameter of 5 mm, and deuterated chloroform ($CDCl_3$) is added as a solvent to the tube.

The sample is dissolved in the solvent in a thermostat at 40°C to prepare a solution.

From the resultant $^1$H-NMR chart, the structures of various monomer units are identified, and the integrated values $S_1$, $S_2$, $S_3$, ··· $S_n$ of peaks attributed to the respective monomer units are calculated.

The content ratio of each of the various monomer units is determined by using the integrated values $S_1$, $S_2$, $S_3$, ··· $S_n$ as described below. $n_1$, $n_2$, $n_3$, ··· $n_n$ each represent the number of hydrogen atoms in each of the monomer units.

$$\text{Content ratio of each of various monomer units (mol\%)} = \{(S_n/n_n)/((S_1/n_1)+(S_2/n_2)+(S_3/n_3)\cdots+(S_n/n_n))\}\times 100$$

The content ratio of each of the various monomer units (mol%) is calculated by changing the numerator term in the same operation. When such a polymerizable monomer that each of the various monomer units is free of any hydrogen atom is used, the measurement is performed by using $^{13}$C-NMR through use of $^{13}$C as a measurement atomic nucleus in a single-pulse mode, and the calculation is performed in the same manner as in $^1$H-NMR.

<Method of calculating SP Values of Amorphous Resin A and Crystalline Polyester Resin C>

The SP value of each of the amorphous resin A and the crystalline polyester resin C is calculated in accordance with a calculation method proposed by Fedors.

Specifically, the evaporation energy (Δei), molar volume (Δvi), and molar ratio (j) in the resin of each monomer unit are determined. The SP value is calculated through use of the determined values from the following equation.

$$\text{SP value } (\text{cal/cm}^3)^{0.5} = \{(\sum j\times\sum\Delta ei)/(\sum j\times\sum\Delta vi)\}^{0.5}$$

Regarding the evaporation energy (Δei) and molar volume (Δvi) of an atom or an atomic group in the monomer unit, values described in "Polym. Eng. Sci., 14(2), 147-154 (1974)" are used.

<Method of measuring Content $W_P$ of Phosphorus Element in Toner>

The content $W_P$ (mass ppm) of the phosphorus elements in the toner is measured with a multi-element simultaneous ICP emission spectrometer Vista-PRO (manufactured by Hitachi High-Tech Science Corporation).

Sample: 50 mg
Solvent: 6 mL of nitric acid

The above-mentioned materials were weighed and subjected to decomposition treatment with a microwave sample pretreatment device ETHOS UP (manufactured by Milestone General K.K.).
Temperature: The temperature is increased from 20°C to 230°C and held at 230°C for 30 min.

The decomposed solution is passed through filter paper (5C). After that, the decomposed solution is transferred to a 50 mL measuring flask and diluted to 50 mL with ultrapure water. The aqueous solution in the measuring flask is measured with the multi-element simultaneous ICP emission spectrometer Vista-PRO under the following conditions, thereby being capable of quantifying the content of the phosphorus elements in the toner. In the quantification of the content, a calibration curve is prepared through use of a standard sample of the elements to be quantified, and the content is calculated based on the calibration curve.

Condition: RF power 1.20 kW
Ar gas: Plasma flow 15.0 L/min
Auxiliary flow: 1.50 L/min
MFC: 1.50 L/min
Nebulizer flow: 0.90 L/min
Liquid feed pump speed: 15 rpm
Measurement repetition: 3 times
Measurement time: 1.0 s.

<Electrophotographic Apparatus and Process Cartridge>

The electrophotographic apparatus according to the present disclosure is characterized by including the electrophotographic photosensitive member described above, a toner, a charging unit, an image exposing unit, a developing unit, a transfer unit, and a cleaning unit.

An example of the configuration of a process cartridge including the electrophotographic photosensitive member in the present disclosure is illustrated in FIG. 1, and an example of the schematic configuration of an electrophotographic apparatus including the process cartridge of FIG. 1 is illustrated in FIG. 2.

In FIG. 1, a cylindrical electrophotographic photosensitive member 1 is driven to rotate at a predetermined peripheral speed in a direction indicated by the arrow. The circumferential surface of the electrophotographic photosensitive member 1 that is driven to rotate is uniformly charged to a positive or negative predetermined potential by a charging unit 2. Then, the charged circumferential surface of the electrophotographic photosensitive member 1 receives exposure light (image exposure light) 3 output from an exposing unit (not shown), such as slit exposure light or laser beam scanning exposure light. Thus, an electrostatic latent image corresponding to an intended image is sequentially formed on the circumferential surface of the electrophotographic photosensitive member 1. Any one of a voltage in which an AC component is superimposed on a DC component or a voltage formed of only a DC component may be used as a voltage to be applied to the charging unit (e.g., a charging roller) 2.

The electrostatic latent image formed on the circumferential surface of the electrophotographic photosensitive member 1 is developed with a toner in a developer of a developing unit 4 to form a toner image. Then, the toner image formed and borne on the circumferential surface of the electrophotographic photosensitive member 1 is sequentially transferred onto a transfer material (e.g., paper or an intermediate transfer member) 6 with a transfer bias from a transfer unit (e.g., a transfer roller) 5. The transfer material 6 is fed in synchronization with the rotation of the electrophotographic photosensitive member 1.

The surface of the electrophotographic photosensitive member 1 after the transfer of the toner image is subjected to charge eliminating treatment with pre-exposure light 7 from a pre-exposing unit (not shown). After that, the surface is cleaned by removal of a transfer residual toner with a cleaning unit 8. Then, the electrophotographic photosensitive member 1 is repeatedly used for image formation. The treatment by the pre-exposing unit may be performed before or after a cleaning step, and the pre-exposing unit is not necessarily required.

The electrophotographic photosensitive member 1 may be mounted on an electrophotographic apparatus, such as a copying machine or a laser beam printer. In addition, a process cartridge 9 configured to integrally support a plurality of constituent elements, such as the electrophotographic photosensitive member 1, the charging unit 2, the developing unit 4, and the cleaning unit 8, accommodated in a container may be configured to be detachably attachable onto a main body of an electrophotographic apparatus. In FIG. 1, the electrophotographic photosensitive member 1, the charging unit 2, the developing unit 4, and the cleaning unit 8 are integrally supported to form the process cartridge 9 that is detachably attachable onto a main body of an electrophotographic apparatus.

For example, the process cartridge 9 may be used as the process cartridge according to the present disclosure by adopting the following configuration: a process cartridge including: the electrophotographic photosensitive member 1; and the developing unit 4, which includes a toner, and which is configured to develop an electrostatic latent image formed on a surface of the electrophotographic photosensitive member with the toner to form a toner image on the surface of the electrophotographic photosensitive member, the process cartridge integrally supporting the electrophotographic photosensitive member and the developing unit, and being detachably attachable onto a main body of an electrophotographic apparatus, wherein the electrophotographic photosensitive member 1 includes a surface layer containing a compound represented by the following formula (1), a binder resin, and silicone resin particles, and wherein the toner includes toner particles each containing a polyester resin having a polyethylene terephthalate segment:

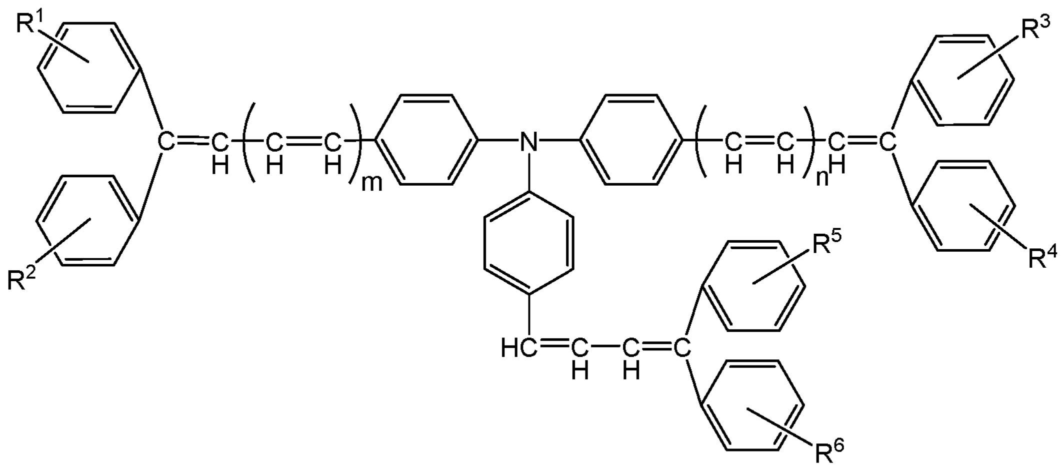

(1)

in the formula (1), $R^1$, $R^2$, $R^3$, $R^4$, $R^5$, and $R^6$ each independently represent a hydrogen atom, a halogen atom, a substituted or unsubstituted alkyl group having 1 or more and 20 or less carbon atoms, a substituted or unsubstituted alkoxy group having 1 or more and 20 or less carbon atoms, or a substituted or unsubstituted aryl group having 6 or more and 30 or less carbon atoms, or $R^1$ and $R^2$, $R^3$ and $R^4$, and $R^5$ and $R^6$ are each independently bonded to each other to form a hydrocarbon ring structure, and "n" and "m" each independently represent 1 or 2.

Next, an electrophotographic apparatus including the electrophotographic photosensitive member in the present disclosure is described.

An example of the configuration of the electrophotographic apparatus according to the present disclosure is illustrated in FIG. 2. In FIG. 2, a process cartridge 17 for yellow color, a process cartridge 18 for magenta color, a process cartridge 19 for cyan color, and a process cartridge 20 for black color are arranged side by side along an intermediate transfer member 10. The diameter and constituent materials of the electrophotographic photosensitive member, a developer, a charging system, and other units are not necessarily required to be the same for each color.

When an image forming operation is started, a toner image of each color is sequentially superimposed on the intermediate transfer member 10 in accordance with the above-mentioned image forming process. In parallel, a transfer sheet 11 is sent from a sheet feeding tray 13 through a sheet feeding path 12 and fed to a secondary transfer unit 14 in synchronization with the timing of the rotation operation of the intermediate transfer member. A toner image on the intermediate transfer member 10 is transferred onto the transfer sheet 11 with a transfer bias from the secondary transfer unit 14. The toner image transferred onto the transfer sheet 11 is conveyed along the sheet feeding path 12 and fixed onto the transfer sheet 11 by a fixing unit 15. Then, the transfer sheet 11 is delivered from a sheet delivery portion 16.

The electrophotographic photosensitive member, the process cartridge, and the electrophotographic apparatus in the present disclosure may be used in a laser beam printer, an LED printer, a copying machine, a facsimile, a multifunctional peripheral thereof, and the like.

According to one aspect of the present disclosure, there can be provided an electrophotographic apparatus in which the occurrence of image density unevenness (pattern memory) at the time of repeated use under a high-temperature and high-humidity environment is suppressed.

## Examples

The present disclosure is more specifically described below by way of Examples, but the present disclosure is not limited thereto. The numbers of parts in the following formulations are all by mass unless otherwise stated.

### [Production Examples of Electrophotographic Photosensitive Members]

### <Production Example of Electrophotographic Photosensitive Member 1>

(Support)

An aluminum cylinder having a length of 357.5 mm and an outer diameter of 30 mm was prepared as a support (electroconductive support).

(Undercoat Layer)

100 Parts of zinc oxide particles (specific surface area: 19 $m^2/g$, powder resistance: $3.6\times10^6$ $\Omega\cdot cm$) serving as metal oxide particles were stirred and mixed with 500 parts of toluene, and 0.8 part of a silane coupling agent was added to the mixture, followed by stirring for 6 hours. The silane coupling agent used was N-2-(aminoethyl)-3-aminopropylmethyldimethoxysilane (product name: KBM602, manufactured by Shin-Etsu Chemical Co., Ltd.). After that, toluene was evaporated under reduced pressure, and the residue was dried by heating at 130°C for 6 hours to provide surface-treated zinc oxide particles.

Next, the following materials were prepared.

| | |
|---|---|
| ·Butyral resin (product name: BM-1, manufactured by Sekisui Chemical Co., Ltd.) serving as a polyol resin | 15 parts |
| ·Blocked isocyanate (product name: Sumidur 3175, manufactured by Sumika Bayer Urethane Co., Ltd.) | 15 parts |

Those materials were dissolved in a mixed solution of 73.5 parts of methyl ethyl ketone and 73.5 parts of 1-butanol. 80.8 Parts of the above-mentioned surface-treated zinc oxide particles and 0.8 part of 2,3,4-trihydroxybenzophenone (manufactured by Tokyo Chemical Industry Co., Ltd.) were added to the solution, and the contents were dispersed under an atmosphere of 23±3°C for 3 hours with a sand mill device using glass beads each having a diameter of 0.8 mm.

Next, the following materials were prepared.

| | |
|---|---|
| ·Silicone oil (product name: SH28PA, manufactured by Dow Corning Toray Silicone Co., Ltd.) | 0.01 part |
| ·Crosslinked polymethyl methacrylate (PMMA) particles (product name: TECHPOLYMER SSX-102, manufactured by Sekisui Kasei Co., Ltd., average primary particle diameter: 2.5 μm) | 5.6 parts |

Those materials were added to the above-mentioned solution after the dispersion, followed by stirring, to prepare a coating liquid for an undercoat layer.

The coating liquid for an undercoat layer was applied onto the above-mentioned support by dipping, and the resultant coat was dried at 160°C for 40 minutes to form an undercoat layer having a thickness of 18 μm.

(Charge Generating Layer)

Next, the following materials were prepared.

| | |
|---|---|
| ·Hydroxygallium phthalocyanine crystal of a crystal form having peaks at Bragg angles 2θ±0.2° of 7.4° and 28.2° in CuKα characteristic X-ray diffraction (charge generating substance) | 20 parts |
| ·Calixarene compound represented by the following formula (C) | 0.2 part |

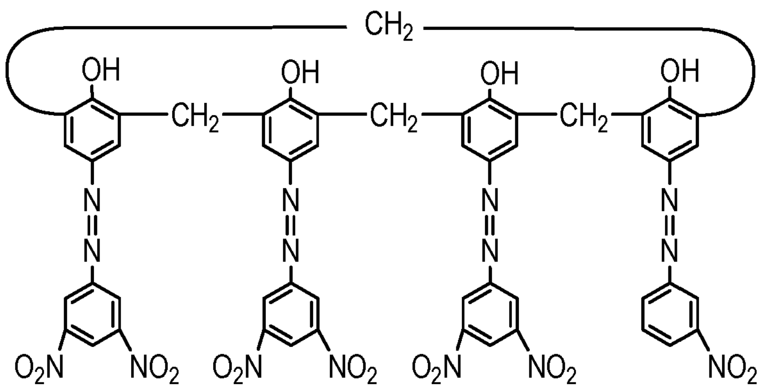

(C)

| | |
|---|---|
| ·Polyvinyl butyral (product name: S-LEC BX-1, manufactured by Sekisui Chemical Co., Ltd.) | 10 parts |
| ·Cyclohexanone | 600 parts |

Those materials were loaded into a sand mill using glass beads each having a diameter of 1 mm and subjected to dispersion treatment for 4 hours. After that, 700 parts of ethyl acetate was added to the mixture to prepare a coating liquid for a charge generating layer. The coating liquid for a charge generating layer was applied onto the undercoat layer by dipping, and the resultant coat was dried at 80°C for 15 minutes to form a charge generating layer having a thickness of 0.17 μm.

(Charge Transporting Layer (Surface Layer))

Next, the following materials were prepared.

| | |
|---|---|
| ·Compound represented by the formula (1) (exemplary compound 1-1 shown in Table 1) | 12 parts by mass |
| ·N,N'-bis(3-methylphenyl)-N,N'-diphenylbenzidine | 30 parts by mass |
| ·Polycarbonate resin (product name: Iupilon Z-400, manufactured by Mitsubishi Engineering-Plastics Corporation, bisphenol Z-type polycarbonate) | 55 parts by mass |
| ·Silicone resin particles X-52-854 (manufactured by Shin-Etsu Chemical Co., Ltd., number-average primary particle diameter: 700 nm) | 3.0 parts by mass |

Those materials were added to 240 parts by mass of tetrahydrofuran and 110 parts by mass of toluene and dissolved therein, and were dispersed at 5,500 rpm for 2 hours with a homogenizer (ULTRA-TURRAX, manufactured by IKA) to provide a coating liquid for a charge transporting layer (surface layer). The coating liquid was applied onto the charge generating layer by dipping, and the resultant coat was dried at 115°C for 40 minutes to form a charge transporting layer (surface layer) having a thickness of 20 μm. An electrophotographic photosensitive member 1 having the configuration illustrated in FIG. 3 was obtained by the above-mentioned treatment.

<Production Example of Electrophotographic Photosensitive Member 2>

An electrophotographic photosensitive member 2 was produced in the same manner as in the production example of the electrophotographic photosensitive member 1 except that the content of the silicone resin particles in the charge transporting layer (surface layer) was changed from 3.0 parts by weight to 1.1 parts by weight.

<Production Example of Electrophotographic Photosensitive Member 3>

An electrophotographic photosensitive member 3 was produced in the same manner as in the production example of the electrophotographic photosensitive member 1 except that the content of the silicone resin particles in the charge transporting layer (surface layer) was changed from 3.0 parts by weight to 1.2 parts by weight.

<Production Example of Electrophotographic Photosensitive Member 4>

An electrophotographic photosensitive member 4 was produced in the same manner as in the production example of the electrophotographic photosensitive member 1 except that the content of the silicone resin particles in the charge transporting layer (surface layer) was changed from 3.0 parts by weight to 12.0 parts by weight.

<Production Example of Electrophotographic Photosensitive Member 5>

An electrophotographic photosensitive member 5 was produced in the same manner as in the production example of the electrophotographic photosensitive member 1 except that the content of the silicone resin particles in the charge transporting layer (surface layer) was changed from 3.0 parts by weight to 17.0 parts by weight.

<Production Example of Electrophotographic Photosensitive Member 6>

An electrophotographic photosensitive member 6 was produced in the same manner as in the production example of the electrophotographic photosensitive member 1 except that the silicone resin particles in the charge transporting layer (surface layer) were changed to MSP-N050 (manufactured by Nikko Rica Corporation, number-average primary particle diameter: 500 nm).

<Production Example of Electrophotographic Photosensitive Member 7>

An electrophotographic photosensitive member 7 was produced in the same manner as in the production example of the electrophotographic photosensitive member 1 except that the silicone resin particles in the charge transporting layer (surface layer) were changed to KMP-590 (manufactured by Shin-Etsu Chemical Co., Ltd., number-average primary particle diameter: 2,000 nm).

<Production Example of Electrophotographic Photosensitive Member 8>

An electrophotographic photosensitive member 8 was produced in the same manner as in the production example of the electrophotographic photosensitive member 1 except that the silicone resin particles in the charge transporting layer (surface layer) were changed to X-52-1621 (manufactured by Shin-Etsu Chemical Co., Ltd., number-average primary particle diameter: 5,000 nm).

<Production Example of Electrophotographic Photosensitive Member 9>

The content of the silicone resin particles in the charge transporting layer (surface layer) was changed from 3.0 parts by weight to 17.0 parts by weight, and the kind of the silicone resin particles in the charge transporting layer (surface layer) was changed to X-52-1621 (manufactured by Shin-Etsu Chemical Co., Ltd., number-average primary particle diameter: 5,000 nm). An electrophotographic photosensitive member 9 was produced in the same manner as in the production example of the electrophotographic photosensitive member 1 except for the foregoing.

<Production Example of Electrophotographic Photosensitive Member 10>

An electrophotographic photosensitive member 10 was produced in the same manner as in the production example of the electrophotographic photosensitive member 1 except that the silicone resin particles in the charge transporting layer (surface layer) were not added.

<Production Example of Electrophotographic Photosensitive Member 11>

The silicone resin particles in the charge transporting layer (surface layer) were changed to an acrylic resin FS-501 (manufactured by Nippon Paint Industrial Coatings Co., Ltd., number-average primary particle diameter: 500 nm). An electrophotographic photosensitive member 11 was produced in the same manner as in the production example of the electrophotographic photosensitive member 1 except for the foregoing.

The materials used in the produced electrophotographic photosensitive members 1 to 11 are shown in Table 2.

Table 2

| | Compound represented by formula (1) | | Silicone resin particles | | | |
|---|---|---|---|---|---|---|
| | Compound | Number of parts | Compound | Number of parts | Content with respect to compound represented by formula (1) in surface layer (mass%) | Number-average primary particle diameter (nm) |
| Electrophotographic photosensitive member 1 | Exemplary compound 1-1 | 12 | X-52-854 | 3.0 | 25 | 700 |
| Electrophotographic photosensitive member 2 | Exemplary compound 1-1 | 12 | X-52-854 | 1.1 | 9 | 700 |
| Electrophotographic photosensitive member 3 | Exemplary compound 1-1 | 12 | X-52-854 | 1.2 | 10 | 700 |

(continued)

| | Compound represented by formula (1) | | Silicone resin particles | | | |
|---|---|---|---|---|---|---|
| | Compound | Number of parts | Compound | Number of parts | Content with respect to compound represented by formula (1) in surface layer (mass%) | Number-average primary particle diameter (nm) |
| Electrophotographic photosensitive member 4 | Exemplary compound 1-1 | 12 | X-52-854 | 12.0 | 100 | 700 |
| Electrophotographic photosensitive member 5 | Exemplary compound 1-1 | 12 | X-52-854 | 17.0 | 142 | 700 |
| Electrophotographic photosensitive member 6 | Exemplary compound 1-1 | 12 | MSP-N050 | 3.0 | 25 | 500 |
| Electrophotographic photosensitive member 7 | Exemplary compound 1-1 | 12 | KMP-590 | 3.0 | 25 | 2,000 |
| Electrophotographic photosensitive member 8 | Exemplary compound 1-1 | 12 | X-52-1621 | 3.0 | 25 | 5,000 |
| Electrophotographic photosensitive member 9 | Exemplary compound 1-1 | 12 | X-52-1621 | 17.0 | 142 | 5,000 |
| Electrophotographic photosensitive member 10 | Exemplary compound 1-1 | 12 | None | 0.0 | - | - |
| Electrophotographic photosensitive member 11 | Exemplary compound 1-1 | 12 | None | 0.0 | - | - |

[Production Example 1 of Toner]

<Measurement Method for Softening Point of Resin>

The softening point of a resin is measured with a constant-pressure extrusion system capillary rheometer (product name: flow characteristic evaluating device Flowtester CFT-500D, manufactured by Shimadzu Corporation) in accordance with the manual attached to the apparatus. In this apparatus, a measurement sample filled into a cylinder is increased in temperature to be melted while a constant load is applied to the measurement sample with a piston from above, and the melted measurement sample is extruded from a die in a bottom part of the cylinder. At this time, a flow curve representing a relationship between a piston descent amount and a temperature can be obtained.

A "melting temperature in a 1/2 method" described in the manual attached to the "flow characteristic evaluating device Flowtester CFT-500D" is adopted as the softening point. The melting temperature in the 1/2 method is calculated as described below. First, 1/2 of a difference between a descent amount (Smax) of the piston at a time when the outflow is finished and a descent amount (Smin) of the piston at a time when the outflow is started is determined (The 1/2 of the difference is represented by X. X=(Smax-Smin)/2). Then, the temperature when the descent amount of the piston reaches the sum of X and Smin in the flow curve is the melting temperature in the 1/2 method.

The measurement sample to be used is obtained by subjecting about 1.0 g of the resin to compression molding at about 10 MPa for about 60 seconds through use of a tablet compressing machine (e.g., NT-100H, manufactured by NPa SYSTEM Co., Ltd.) under an environment at 25°C to form the sample into a columnar shape having a diameter of about 8

mm.

The measurement conditions of the CFT-500D are as described below. Test mode: heating method

Starting temperature: 50°C
Reached temperature: 200°C
Measurement interval: 1.0°C
Rate of temperature increase: 4.0°C/min
Piston sectional area: 1.000 $cm^2$
Test load (piston load): 10.0 $kgf/cm^2$ (0.9807 MPa)
Preheating time: 300 seconds
Diameter of hole of die: 1.0 mm
Length of die: 1.0 mm

<Production Example of Resin 1>

The following materials were loaded into a reaction vessel with a reflux condenser, a stirring machine, a temperature gauge, and a nitrogen introducing tube under a nitrogen atmosphere.

| | |
|---|---|
| ·Propylene oxide adduct of bisphenol A (average number of moles added: 2.2 mol) | 100 parts by mass |
| ·Recovered polyethylene terephthalate (diethylene glycol content=1.3 mass%) | 21 parts by mass |
| ·Dibutyltin oxide | 0.08 part by mass |

A reaction was performed for 7 hours by heating the inside of the reaction vessel to 230°C under stirring at 200 rpm. Subsequently, the mixture was cooled to 180°C, and 30 parts by mass of fumaric acid and 0.08 part by mass of hydroquinone were loaded into the reaction vessel, followed by heating to 210°C over 4 hours. After that, the inside of the reaction vessel was reduced in pressure to 8 kPa, and the resultant was subjected to a reaction until the softening point of 103°C was achieved. Thus, a resin 1 was obtained.

<Production Example of Resin 2>

The following materials were loaded into a reaction vessel with a reflux condenser, a stirring machine, a temperature gauge, and a nitrogen introducing tube under a nitrogen atmosphere.

| | |
|---|---|
| ·Propylene oxide adduct of bisphenol A (average number of moles added: 2.2 mol) | 100 parts by mass |
| ·Ethylene oxide adduct of bisphenol A (average number of moles added: 2.2 mol) | 40 parts by mass |
| ·Dodecenylsuccinic anhydride | 13 parts by mass |
| ·Terephthalic acid | 37 parts by mass |
| ·Trimellitic anhydride | 12 parts by mass |
| ·Dibutyltin oxide | 0.5 part by mass |

A reaction was performed for 4 hours by heating the inside of the reaction vessel to 235°C under stirring at 200 rpm. After that, the inside of the reaction vessel was reduced in pressure to 8 kPa, and the resultant was subjected to a reaction until the softening point of 146°C was achieved. Thus, a resin 2 was obtained.

<Production Example of Toner Particles 1>

| | |
|---|---|
| ·Resin 1 | 70 parts by mass |
| ·Resin 2 | 30 parts by mass |
| ·Colorant ECB-301 (manufactured by Dainichiseika Color & Chemicals Mfg. Co., Ltd., C.I. Pigment Blue 15:3) | 5 parts by mass |
| ·Charge control agent LR-147 (manufactured by Japan Carlit Co., Ltd.) | 1 part by mass |
| ·Release agent NP-105 (manufactured by Mitsui Chemicals, Inc., melting point: 140°C) | 4 parts by mass |

The above-mentioned materials were mixed with a Henschel mixer (model FM-75, manufactured by Nippon Coke & Engineering Co., Ltd.) at a number of rotations of 20 $s^{-1}$ for a time of rotation of 5 min. After that, the mixture was kneaded at a discharge temperature of 135°C with a twin-screw kneading machine (model PCM-30, manufactured by Ikegai Corp.) set to a temperature of 120°C and a number of rotations of a screw of 200 rpm. The kneaded product thus obtained was cooled at a cooling speed of 15°C/min and coarsely pulverized with a hammer mill to 1 mm or less to provide a coarsely pulverized product. The coarsely pulverized product thus obtained was finely pulverized with a mechanical pulverizer (T-250, manufactured by FREUND-Turbo Corporation). Further, the finely pulverized product was classified with FACULTY F-300 (manufactured by Hosokawa Micron Corporation) to provide toner particles 1. Operating conditions were as follows: the number of rotations of a classification rotor was set to 130 $s^{-1}$ and the number of rotations of a dispersion rotor was set to 120 $s^{-1}$.

<Production Example of Toner 1>

The following materials were mixed with a Henschel mixer (model FM-10C, manufactured by Nippon Coke & Engineering Co., Ltd.) at a number of rotations of 30 $s^{-1}$ for a time of rotation of 10 min to provide a toner 1.

| | |
|---|---|
| ·Toner particles 1 | 100 parts by mass |
| ·External additive 1 AEROSIL R-972 (manufactured by Nippon Aerosil Co., Ltd., average particle diameter: 16 nm) | 1.0 part by mass |
| ·External additive 2 SI-Y (manufactured by Nippon Aerosil Co., Ltd., average particle diameter: 40 nm) | 1.0 part by mass |

<Production Example of Magnetic Carrier 1>

·Magnetite 1 having a number-average particle diameter of 0.30 μm (intensity of magnetization under a magnetic field of 1,000/4π (kA/m): 65 $Am^2/kg$)

·Magnetite 2 having a number-average particle diameter of 0.50 μm (intensity of magnetization under a magnetic field of 1,000/4π (kA/m): 65 $Am^2/kg$)

4.0 Parts by mass of a silane compound (3-(2-aminoethylaminopropyl)trimethoxysilane) was added to 100 parts by mass of the above-mentioned respective materials, and the materials were mixed and stirred at a high speed at 100°C or more in a container to treat each of fine particles.

| | |
|---|---|
| ·Phenol: | 10 mass% |
| ·Formaldehyde solution: (40 mass% of formaldehyde, 10 mass% of methanol, and 50 mass% of water) | 6 mass% |
| ·Magnetite 1 treated with the above-mentioned silane compound: | 58 mass% |
| ·Magnetite 2 treated with the above-mentioned silane compound: | 26 mass% |

100 Parts of the above-mentioned materials, 5 parts of a 28 mass% ammonia aqueous solution, and 20 parts of water were loaded into a flask, and the temperature in the flask was increased to 85°C in 30 minutes while the materials were stirred and mixed. The resultant was held for 3 hours to perform a polymerization reaction to cure a generated phenol resin. After that, the cured phenol resin was cooled to 30°C, and water was further added thereto. Then, the supernatant liquid was removed, and the precipitate was washed with water, followed by air-drying. Then, the resultant was dried at a temperature of 60°C under reduced pressure (5 mmHg or less) to provide a magnetic material-dispersed spherical magnetic carrier 1. The volume-based 50% particle diameter ($D_{50}$) of the carrier was 34 μm.

<Production Example of Developer 1>

The following materials were mixed with a V-type mixer (V-20, manufactured by Seishin Enterprise Co., Ltd.) to provide a developer 1.

| | |
|---|---|
| ·Toner 1 | 8 parts by mass |

(continued)

·Magnetic carrier 1 92 parts by mass

[Example 1]

The produced electrophotographic photosensitive member 1 was mounted to a cyan station of a reconstructed machine of an electrophotographic copying machine iR-ADV C5560F III manufactured by Canon Inc., and the developer 1 was set in a developing machine as a developer.

[Evaluation 1: Evaluation of Pattern Memory]

The above-mentioned electrophotographic apparatus was placed under an environment at 32.5°C/85%RH. The conditions of a charging device and an exposing device were set so that the charge potential of the electrophotographic photosensitive member was -600 V and the exposure potential thereof was -200 V, and the conditions of a developing device were set so that the developing potential was -420 V.

As a pattern image to be output, a pattern image including an image having a width of 10 mm and a length of 200 mm in a direction parallel to a sheet passing direction was prepared. Next, the pattern image was continuously output onto 5,000 sheets of A4-size plain paper as a solid image with a density of 100% in cyan monochromatic color. Subsequently, an evaluation was made regarding whether or not a density difference had occurred in an image portion having a width of 10 mm and a length of 200 mm output previously when a full-screen halftone image having a density of 30% was output onto one sheet in cyan monochromatic color. The output image was evaluated based on the following evaluation criteria. The evaluation results are shown in Table 3.

(Evaluation Criteria for Pattern Memory)

A: No density difference occurs.
B: A density difference occurs to the extent that whether or not the density difference is present cannot be determined.
C: A slight density difference occurs (acceptable level in the present disclosure).
D: A clear density difference occurs (unacceptable level in the present disclosure).

[Evaluation 2: Evaluation of Potential Fluctuation at Time of Repeated Use]

The above-mentioned electrophotographic apparatus was placed under an environment at 23°C/50%RH. The conditions of a charging device and an exposing device were set so that the charge potential of the electrophotographic photosensitive member was -600 V and the exposure potential thereof was -200 V, and the conditions of a developing device were set so that the developing potential was -420 V.

A character image having a print percentage of 1% was repeatedly formed on 10,000 sheets of A4-size plain paper in monochromatic color in a cyan station in which the electrophotographic photosensitive member was set. An initial exposure potential was compared to an exposure potential after the repeated formation of the image on the 10,000 sheets, and the difference therebetween was defined as a value ($\Delta$Vl) of potential fluctuation. After the completion of the passage of the 10,000 sheets, the apparatus was left for 5 minutes, and a cartridge for development was replaced with a potential measuring device. Then, an exposure potential (Vlb) after repeated use was measured. The difference between the exposure potential after the repeated use and an initial exposure potential (Vla) was defined as an exposure potential fluctuation amount ($\Delta Vl=|Vlb|-|Vla|$).

The results of the evaluation based on the following evaluation criteria are shown in Table 3.

(Evaluation Criteria for $\Delta$Vl)

A: The $\Delta$Vl is 0 V or more and less than 30 V (excellent).
B: The $\Delta$Vl is 30 V or more and less than 40 V (slightly excellent).
C: The $\Delta$Vl is 40 V or more and less than 50 V (acceptable level in the present disclosure).
D: The $\Delta$Vl is 50 V or more (unacceptable level in the present disclosure).

[Examples 2 to 9, and Comparative Examples 1 and 2]

Electrophotographic apparatus were each evaluated in the same manner as in Example 1 except that the kinds of the electrophotographic photosensitive member and the developer were changed as shown in Table 3. The evaluation results are shown in Table 3.

Table 3

| | Electrophotographic photosensitive member | Developer | Silicone resin particles | | | Pattern memory | ΔVl after passage of 10,000 sheets [V] |
|---|---|---|---|---|---|---|---|
| | | | Compound | Content with respect to compound represented by formula (1) in surface layer (mass%) | Number-average primary particle diameter (nm) | | |
| Example 1 | 1 | 1 | X-52-854 | 25 | 700 | A | A |
| Example 2 | 2 | 1 | X-52-854 | 9 | 700 | B | A |
| Example 3 | 3 | 1 | X-52-854 | 10 | 700 | A | A |
| Example 4 | 4 | 1 | X-52-854 | 100 | 700 | A | A |
| Example 5 | 5 | 1 | X-52-854 | 142 | 700 | A | B |
| Example 6 | 6 | 1 | MSP-N050 | 25 | 500 | A | A |
| Example 7 | 7 | 1 | KMP-590 | 25 | 2,000 | A | A |
| Example 8 | 8 | 1 | X-52-1621 | 25 | 5,000 | A | B |
| Example 9 | 9 | 1 | X-52-1621 | 142 | 5,000 | A | C |
| Comparative Example 1 | 10 | 1 | None | - | - | D | A |
| Comparative Example 2 | 11 | 1 | None | - | - | D | A |

[Production Example 2 of Toner]

<Production of Amorphous Resin A1>

| | |
|---|---|
| ·Polyethylene terephthalate (molecular weight: 2,000, intrinsic viscosity: 0.1): | 20.9 parts by mass (42.0 mol%) |
| ·Propylene oxide adduct of bisphenol A (average number of moles added: 2.0 mol): | 47.4 parts by mass (29.0 mol%) |
| ·Terephthalic acid: | 15.8 parts by mass (18.3 mol%) |
| ·Dodecenylsuccinic acid: | 15.8 parts by mass (10.6 mol%) |
| ·Titanium tetrabutoxide (esterification catalyst): | 0.5 part by mass |
| ·Gallic acid (promoter): | 0.1 part by mass |

The above-mentioned materials were weighed in a reaction vessel with a condenser, a stirring machine, a nitrogen introducing tube, and a thermocouple. The molar ratio of polyethylene terephthalate is a value as the number of units obtained by adding up the number of units derived from ethylene glycol and the number of units derived from terephthalic acid.

Next, the inside of the flask was purged with a nitrogen gas, and then the temperature therein was gradually increased while the materials were stirred. The materials were subjected to a reaction for 2 hours while being stirred at a temperature of 200°C.

Further, the materials were subjected to a reaction for 5 hours while the pressure in the reaction vessel was reduced to 8.3 kPa and the temperature therein was maintained at 200°C. After it was confirmed that the weight-average molecular weight reached 6,700, the temperature was reduced so that the reaction was stopped. Thus, an amorphous resin A1 having a polyethylene terephthalate structure moiety in a molecule thereof was obtained. The physical property of the amorphous resin A1 obtained by the above-mentioned measurement method is shown in Table 4.

<Production of Amorphous Resins A2 to A11>

A reaction was performed in the same manner as in the production of the amorphous resin A1 except that the kinds and numbers of parts of polyethylene terephthalate and polymerizable monomers were changed as shown in Table 4. Thus, amorphous resins A2 to A11 each having a polyethylene terephthalate segment in a molecule thereof were obtained. The physical properties of the amorphous resins A2 to A11 obtained by the above-mentioned measurement method are shown in Table 4.

Table 4

| | | Amorphous resin A1 | | Amorphous resin A2 | | Amorphous resin A3 | | Amorphous resin A4 | |
|---|---|---|---|---|---|---|---|---|---|
| | | Number of parts | mol% | Number of parts | mol% | Number of parts | mol% | Number of parts | mol% |
| Polyethylene terephthalate | | 20.9 | 42.0 | 11.0 | 24.9 | 27.0 | 49.9 | 22.7 | 43.1 |
| Alcohol component | BPA-PO | 47.4 | 29.0 | 53.4 | 37.6 | 43.8 | 25.1 | 50.6 | 29.8 |
| | BPA-EO | | | | | | | | |
| Carboxylic acid component | Terephthalic acid | 15.8 | 18.3 | 17.8 | 23.7 | 14.6 | 15.8 | 16.9 | 18.8 |
| | Dodecenylsuccinic acid | 15.8 | 10.6 | 17.8 | 13.8 | 14.6 | 9.2 | | |
| | Tetradecanedioic acid | | | | | | | 10.1 | 8.3 |
| | Suberic acid | | | | | | | | |
| | Octadecanedioic acid | | | | | | | | |
| | Adipic acid | | | | | | | | |
| | Eicosanedioic acid | | | | | | | | |
| | Trimellitic acid | | | | | | | | |
| Physical property | SP | 11.30 | | 11.10 | | 11.44 | | 11.30 | |

| | | Amorphous resin A5 | | Amorphous resin A6 | | Amorphous resin A7 | | Amorphous resin A8 | |
|---|---|---|---|---|---|---|---|---|---|
| | | Number of parts | mol% | Number of parts | mol% | Number of parts | mol% | Number of parts | mol% |
| Polyethylene terephthalate | | 22.6 | 41.1 | 23.0 | 44.7 | 10.0 | 22.9 | 28.5 | 51.7 |
| Alcohol component | BPA-PO | 55.0 | 29.5 | 52.2 | 30.9 | 54.0 | 38.6 | 42.9 | 24.2 |
| | BPA-EO | | | | | | | | |
| Carboxylic acid component | Terephthalic acid | 5.5 | 5.6 | 17.4 | 19.5 | 18.0 | 24.3 | 14.3 | 15.2 |
| | Dodecenylsuccinic acid | | | | | 18.0 | 14.1 | 14.3 | 8.9 |
| | Tetradecanedioic acid | | | | | | | | |
| | Suberic acid | 16.0 | 23.8 | | | | | | |
| | Octadecanedioic acid | | | 7.4 | 4.9 | | | | |
| | Adipic acid | | | | | | | | |
| | Eicosanedioic acid | | | | | | | | |
| | Trimellitic acid | | | | | | | | |
| Physical property | SP | 11.30 | | 11.30 | | 11.08 | | 11.47 | |

| | | Amorphous resin A9 | | Amorphous resin A10 | | Amorphous resin A11 | |
|---|---|---|---|---|---|---|---|
| | | Number of parts | mol% | Number of parts | mol% | Number of parts | mol% |
| Polyethylene terephthalate | | 22.6 | 41.1 | 23.0 | 45.1 | 28.7 | 55.7 |
| Alcohol component | BPA-PO | 55.0 | 29.5 | 52.4 | 31.1 | 36.6 | 21.7 |
| | BPA-EO | | | | | 14.6 | 9.5 |
| Carboxylic acid component | Terephthalic acid | 5.5 | 5.6 | 17.5 | 19.6 | 2.2 | 2.5 |
| | Dodecenylsuccinic acid | | | | | 9.3 | 6.1 |
| | Tetradecanedioic acid | | | | | | |

| | | | | | | | |
|---|---|---|---|---|---|---|---|
| | Suberic acid | | | | | | |
| | Octadecanedioic acid | | | | | | |
| | Adipic acid | 16.0 | 23.8 | | | | |
| | Eicosanedioic acid | | | 7.0 | 4.2 | | |
| | Trimellitic acid | | | | | 8.6 | 4.5 |
| Physical property | SP | 11.30 | | 11.30 | | 11.45 | |

The abbreviations in Table 4 are as described below. BPA-PO: propylene oxide adduct of bisphenol A (average number of moles added: 2.0 mol)

<Production of Amorphous Resin B 1>

| | |
|---|---|
| ·Polyethylene terephthalate (molecular weight: 2,000, intrinsic viscosity: 0.1): | 4.1 parts by mass (9.8 mol%) |
| ·Propylene oxide adduct of bisphenol A (average number of moles added: 2.0 mol): | 57.8 parts by mass (42.8 mol%) |
| ·Terephthalic acid: | 29.9 parts by mass (41.9 mol%) |
| ·Trimellitic acid: | 7.0 parts by mass (4.5 mol%) |
| ·Stearic acid: | 1.2 parts by mass (1.0 mol%) |
| ·Titanium tetrabutoxide (esterification catalyst): | 0.5 part by mass |
| ·Gallic acid (promoter): | 0.1 part by mass |

The above-mentioned materials were weighed in a reaction vessel with a condenser, a stirring machine, a nitrogen introducing tube, and a thermocouple. Next, the inside of the flask was purged with a nitrogen gas, and then the temperature therein was gradually increased while the materials were stirred. The materials were subjected to a reaction for 2 hours while being stirred at a temperature of 200°C.

Further, the materials were subjected to a reaction for 5 hours while the pressure in the reaction vessel was reduced to 8.3 kPa and the temperature therein was maintained at 200°C. After it was confirmed that the weight-average molecular weight reached 1,000, the temperature was reduced so that the reaction was stopped. Thus, an amorphous resin B1 was obtained. The physical property of the amorphous resin B1 obtained by the above-mentioned measurement method was an SP value of 11.54 $(cal/cm^3)^{0.5}$.

<Production of Crystalline Polyester Resin C1>

| | |
|---|---|
| ·Ethylene glycol: | 10.2 parts by mass (48.2 mol%) |
| ·Tetradecanedioic acid: | 81.3 parts by mass (48.3 mol%) |
| ·Behenic acid: | 8.5 parts by mass (3.5 mol%) |
| ·Titanium tetrabutoxide (esterification catalyst): | 0.5 part by mass |

The above-mentioned materials were weighed in a reaction vessel with a condenser, a stirring machine, a nitrogen introducing tube, and a thermocouple. Next, the inside of the flask was purged with a nitrogen gas, and then the temperature therein was gradually increased while the materials were stirred. The materials were subjected to a reaction for 2 hours while being stirred at a temperature of 200°C.

Further, the materials were subjected to a reaction for 5 hours while the pressure in the reaction vessel was reduced to 8.3 kPa and the temperature therein was maintained at 200°C. After that, the temperature was reduced so that the reaction was stopped. Thus, a crystalline polyester resin C1 was obtained. The physical property of the crystalline polyester resin C1 obtained by the above-mentioned measurement method was an SP value of 10.09 $(cal/cm^3)^{0.5}$.

<Production Example of Toner 2>

| | |
|---|---|
| ·Amorphous resin A1: | 66 parts by mass |
| ·Amorphous resin B1: | 34 parts by mass |
| ·Crystalline polyester resin C1: | 10 parts by mass |
| ·Fischer-Tropsch wax (peak temperature of maximum endothermic peak: 100°C): | 5 parts by mass |
| ·Carbon black: | 5 parts by mass |
| ·Trisodium phosphate: | 0.03 part by mass |

The above-mentioned materials were mixed with a Henschel mixer (model FM-75, manufactured by Mitsui Mining Co., Ltd.) at a number of rotations of 1,500 rpm for a time of rotation of 5 min, and then the mixture was kneaded with a twin-screw kneading machine (model PCM-30, manufactured by Ikegai Corp.) set to a temperature of 130°C. The kneaded product thus obtained was cooled and coarsely pulverized with a hammer mill to 1 mm or less to provide a coarsely pulverized product. The coarsely pulverized product thus obtained was finely pulverized with a mechanical pulverizer (T-250, manufactured by Turbo Kogyo Co., Ltd.). Further, the finely pulverized product was classified with FACULTY (F-300, manufactured by Hosokawa Micron Corporation) to provide toner particles 2. Operating conditions were as follows: the number of rotations of a classification rotor was set to 11,000 rpm and the number of rotations of a dispersion rotor was set to 7,200 rpm.

| | |
|---|---|
| ·Toner particles 2: | 95 parts by mass |
| ·Large-particle-diameter inorganic fine particles: fumed silica subjected to surface treatment with hexamethyldisilazane (number-based median diameter (D50): 120 nm) | 4 parts by mass |
| ·Small-particle-diameter inorganic fine particles: titanium oxide fine particles subjected to surface treatment with isobutyltrimethoxysilane (number-based median diameter (D50): 10 nm) | 1 part by mass |

The above-mentioned materials were mixed with a Henschel mixer (model FM-75, manufactured by Mitsui Miike Chemical Engineering Machinery, Co., Ltd.) at a number of rotations of 1,900 rpm for a time of rotation of 10 min to provide a toner 2 showing negative chargeability. The physical properties of the toner 2 obtained by the above-mentioned measurement method are shown in Table 5.

<Production Examples of Toners 3 to 19>

Toners 3 to 19 were each obtained by performing the same operation as that in the production example of the toner 2 except that the kinds and numbers of parts by mass of the amorphous resin A and the additive were changed as shown in Table 5 in the production example of the toner 2. The physical properties of the toners 3 to 19 each obtained by the above-mentioned measurement method are shown in Table 5.

Table 5

| Toner | Internal additive formulation and physical properties | | | | | | | | | |
|---|---|---|---|---|---|---|---|---|---|---|
| | Amorphous resin A | | Amorphous resin B | | Crystalline polyester resin C | | Additive | | $W_P$ | $SP_A$-$SP_C$ |
| Kind | Kind | Part(s) | Kind | Part(s) | Kind | Part(s) | Kind | Part(s) | ppm | - |
| 2 | 1 | 66 | 1 | 34 | 1 | 10 | PNa | 0.160 | 250 | 1.21 |
| 3 | 2 | 66 | 1 | 34 | 1 | 10 | PNa | 0.160 | 250 | 1.01 |
| 4 | 3 | 66 | 1 | 34 | 1 | 10 | PNa | 0.160 | 250 | 1.35 |
| 5 | 1 | 66 | 1 | 34 | 1 | 10 | PNa | 0.320 | 500 | 1.21 |
| 6 | 1 | 66 | 1 | 34 | 1 | 10 | PNa | 0.015 | 20 | 1.21 |
| 7 | 1 | 66 | 1 | 34 | 1 | 10 | PF | 0.320 | 250 | 1.21 |
| 8 | 4 | 66 | 1 | 34 | 1 | 10 | PNa | 0.160 | 250 | 1.21 |

(continued)

| Toner | Internal additive formulation and physical properties | | | | | | | | | |
|---|---|---|---|---|---|---|---|---|---|---|
| | Amorphous resin A | | Amorphous resin B | | Crystalline polyester resin C | | Additive | | $W_P$ | $SP_A$-$SP_C$ |
| 9 | 5 | 66 | 1 | 34 | 1 | 10 | PNa | 0.160 | 250 | 1.21 |
| 10 | 6 | 66 | 1 | 34 | 1 | 10 | PNa | 0.160 | 250 | 1.21 |
| 11 | 7 | 66 | 1 | 34 | 1 | 10 | PNa | 0.160 | 250 | 0.99 |
| 12 | 8 | 66 | 1 | 34 | 1 | 10 | PNa | 0.160 | 250 | 1.38 |
| 13 | 1 | 66 | 1 | 34 | 1 | 10 | PNa | 0.400 | 600 | 1.21 |
| 14 | 1 | 66 | 1 | 34 | 1 | 10 | - | - | 0 | 1.21 |
| 15 | 9 | 66 | 1 | 34 | 1 | 10 | PNa | 0.160 | 250 | 1.21 |
| 16 | 10 | 66 | 1 | 34 | 1 | 10 | PNa | 0.160 | 250 | 1.21 |
| 17 | 11 | 66 | 1 | 34 | 1 | 10 | PNa | 0.160 | 250 | 1.36 |
| 18 | 1 | 66 | 1 | 34 | 1 | 10 | PNa | 0.004 | 5 | 1.21 |
| 19 | 1 | 66 | 1 | 34 | 1 | 10 | PNa | 0.002 | 3 | 1.21 |

The abbreviations in Table 5 are as described below.

PNa: trisodium phosphate
PF: triphenyl phosphate

<Production Examples of Developers 2 to 19>

Developers 2 to 19 were each obtained by performing the same operation as that in the production example of the developer 1 except that the kind of the toner was changed as shown in Table 6.

Table 6

| Developer | Toner | Carrier |
|---|---|---|
| Kind | Kind | Kind |
| 2 | 2 | 1 |
| 3 | 3 | 1 |
| 4 | 4 | 1 |
| 5 | 5 | 1 |
| 6 | 6 | 1 |
| 7 | 7 | 1 |
| 8 | 8 | 1 |
| 9 | 9 | 1 |
| 10 | 10 | 1 |
| 11 | 11 | 1 |
| 12 | 12 | 1 |
| 13 | 13 | 1 |
| 14 | 14 | 1 |
| 15 | 15 | 1 |
| 16 | 16 | 1 |
| 17 | 17 | 1 |

(continued)

| Developer | Toner | Carrier |
|---|---|---|
| Kind | Kind | Kind |
| 18 | 18 | 1 |
| 19 | 19 | 1 |

[Examples 10 to 27]

The evaluation of each of the electrophotographic apparatus was performed in the same manner as in Example 1 except that the kinds of the developer and the toner were changed as shown in Table 7. In addition, the evaluation of each of scratch resistance and low-temperature fixability was also performed by the following method. The evaluation results are shown in Table 7.

[Evaluation 3: Scratch Resistance]

A reconstructed machine of a printer for digital commercial printing "imagePRESS C800" manufactured by Canon Inc. was used as an image forming apparatus. Each of the developers was loaded into a developing device for cyan. As the reconstructed points of the apparatus, changes were made so that its fixation temperature and process speed, the DC voltage $V_{DC}$ of a developer carrying member, the charging voltage $V_D$ of the electrophotographic photosensitive member, and laser power were able to be freely set. An image output evaluation was performed as follows: an FFh image (solid image) having a desired image print percentage was output and subjected to evaluations to be described later with the $V_{DC}$, the $V_D$, and the laser power being adjusted so as to achieve a desired toner laid-on level on the FFh image on paper. FFh is a value obtained by representing 256 gradations in hexadecimal notation; 00h represents the first gradation (white portion) of the 256 gradations, and FFh represents the 256th gradation (solid portion) of the 256 gradations.

Paper: UPM FINESSE GLOSS 300GSM
Toner laid-on level on paper: 0.05 mg/cm$^2$ (2Fh image)
(The toner laid-on level was adjusted based on the DC voltage $V_{DC}$ of the developer carrying member, the charging voltage $V_D$ of the electrophotographic photosensitive member, and the laser power.)
Evaluation image: An image measuring 3 cm×15 cm was arranged at the center of the above-mentioned A4 paper.
Fixing test environment: Normal-temperature and normal-humidity environment (temperature of 23°C/humidity of 50%RH (hereinafter referred to as "N/N"))
Fixing temperature: 180°C
Process speed: 377 mm/sec

The above-mentioned evaluation image was output and evaluated for scratch resistance. Specifically, through use of a surface property tester HEIDON TYPE 14FW manufactured by SHINTO Scientific Co., Ltd., a 200 g weight was placed on the surface of the image, the surface was scratched with a needle having a diameter of 0.75 mm at a speed of 60 mm/min and a length of 30 mm, and the image was evaluated based on the scratches that appeared thereon. The area ratio of toner peeling was determined by binarizing the area in which the toner peeling occurred with respect to the scratched area by image processing.

(Evaluation Criteria)

A: 0.0%
B: 0.1% or more and less than 0.4%
C: 0.4% or more and less than 0.9%
D: 0.9% or more and less than 1.1%
E: 1.1% or more

[Low-temperature Fixability]

Paper: GFC-081 (81.0 g/m$^2$) (sold from Canon Marketing Japan Inc.)
Toner laid-on level on paper: 0.50 mg/cm$^2$

(The toner laid-on level was adjusted based on the DC voltage $V_{DC}$ of the developer carrying member, the charging voltage $V_D$ of the electrophotographic photosensitive member, and the laser power.)
Evaluation image: An image measuring 2 cm×5 cm was arranged at the center of the above-mentioned A4 paper.
Test environment: Low-temperature and low-humidity environment: temperature of 15°C/humidity of 10%RH (hereinafter referred to as "L/L")
Fixing temperature: 150°C
Process speed: 630 mm/sec

The evaluation image was output and evaluated for low-temperature fixability. The value of an image density reduction ratio was used as an indicator for evaluating the low-temperature fixability.
Through use of an X-Rite color reflection densitometer (500 SERIES: manufactured by X-Rite, Inc.), the image density at the central portion of the image was measured first. Next, the fixed image was rubbed (back and forth 5 times) with lens-cleaning paper with the application of a load of 4.9 kPa (50 g/cm$^2$) to the portion at which the image density was measured, and the image density was measured again.
Then, the reduction ratio of the image density after the rubbing as compared to that before the rubbing was calculated by using the following equation. The resultant image density reduction ratio was evaluated in accordance with the following evaluation criteria. A case of being evaluated as A to C was judged to be satisfactory.

Image density reduction ratio (%)=(image density before rubbing-image density after rubbing)/image density before rubbing×100

(Evaluation Criteria)

A: An image density reduction ratio of less than 3%
B: An image density reduction ratio of 3% or more and less than 5%
C: An image density reduction ratio of 5% or more and less than 8%
D: An image density reduction ratio of 8% or more and less than 10%
E: An image density reduction ratio of 10% or more

Table 7

| Example | Electrophotographic photosensitive member | Two-component developer | Toner | Carrier | Pattern memory | ΔVl after passage of 10,000 sheets [V] | Low-temperature fixability | | | | Scratch resistance | |
|---|---|---|---|---|---|---|---|---|---|---|---|---|
| | Kind | Kind | Kind | Kind | | | | Image density before rubbing | Image density after rubbing | Reduction ratio | | Reflectance difference |
| 10 | 1 | 2 | 2 | 1 | A | A | A | 1.35 | 1.32 | 2% | A | 0.0% |
| 11 | 1 | 3 | 3 | 1 | A | A | A | 1.35 | 1.32 | 2% | D | 1.0% |
| 12 | 1 | 4 | 4 | 1 | A | A | C | 1.35 | 1.28 | 5% | D | 1.0% |
| 13 | 1 | 5 | 5 | 1 | A | A | D | 1.35 | 1.23 | 9% | C | 0.8% |
| 14 | 1 | 6 | 6 | 1 | A | A | A | 1.35 | 1.32 | 2% | D | 1.0% |
| 15 | 1 | 7 | 7 | 1 | A | A | A | 1.35 | 1.32 | 2% | C | 0.7% |
| 16 | 1 | 8 | 8 | 1 | A | A | B | 1.35 | 1.31 | 3% | B | 0.3% |
| 17 | 1 | 9 | 9 | 1 | A | A | C | 1.35 | 1.28 | 5% | C | 0.8% |
| 18 | 1 | 10 | 10 | 1 | A | A | A | 1.35 | 1.32 | 2% | D | 1.0% |
| 19 | 1 | 11 | 11 | 1 | A | A | A | 1.35 | 1.32 | 2% | E | 1.3% |
| 20 | 1 | 12 | 12 | 1 | A | A | E | 1.35 | 1.21 | 10% | E | 1.3% |
| 21 | 1 | 13 | 13 | 1 | A | A | E | 1.35 | 1.21 | 10% | E | 1.2% |
| 22 | 1 | 14 | 14 | 1 | A | A | A | 1.35 | 1.32 | 2% | E | 1.2% |
| 23 | 1 | 15 | 15 | 1 | A | A | E | 1.35 | 1.21 | 10% | E | 1.2% |
| 24 | 1 | 16 | 16 | 1 | A | A | A | 1.35 | 1.32 | 2% | E | 1.2% |
| 25 | 1 | 17 | 17 | 1 | A | A | E | 1.35 | 1.21 | 10% | E | 1.3% |
| 26 | 1 | 18 | 18 | 1 | A | A | A | 1.35 | 1.32 | 2% | D | 1.0% |
| 27 | 1 | 19 | 19 | 1 | A | A | A | 1.35 | 1.32 | 2% | E | 1.1% |

In the toner to be used in the electrophotographic apparatus of the present disclosure, polyethylene terephthalate regenerated from a spent PET bottle or the like can be used as a toner material, and hence the technology described herein can contribute to the realization of a sustainable society such as a decarbonized/recycling-oriented society.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An electrophotographic apparatus comprising:

    an electrophotographic photosensitive member;
    a charging unit configured to charge a surface of the electrophotographic photosensitive member;
    an image exposing unit configured to irradiate the charged surface of the electrophotographic photosensitive member with image exposure light to form an electrostatic latent image on the surface of the electrophotographic photosensitive member;
    a developing unit, which includes a toner, and which is configured to develop the electrostatic latent image with the toner to form a toner image on the surface of the electrophotographic photosensitive member;
    a transfer unit configured to transfer the toner image from the surface of the electrophotographic photosensitive member onto a transfer material; and
    a cleaning unit configured to remove a residual toner remaining on the surface of the electrophotographic photosensitive member after the toner image is transferred from the surface of the electrophotographic photosensitive member onto the transfer material,
    wherein the electrophotographic photosensitive member includes a surface layer containing a compound represented by the following formula (1), a binder resin, and silicone resin particles, and
    wherein the toner includes toner particles each containing a polyester resin having a polyethylene terephthalate segment:

    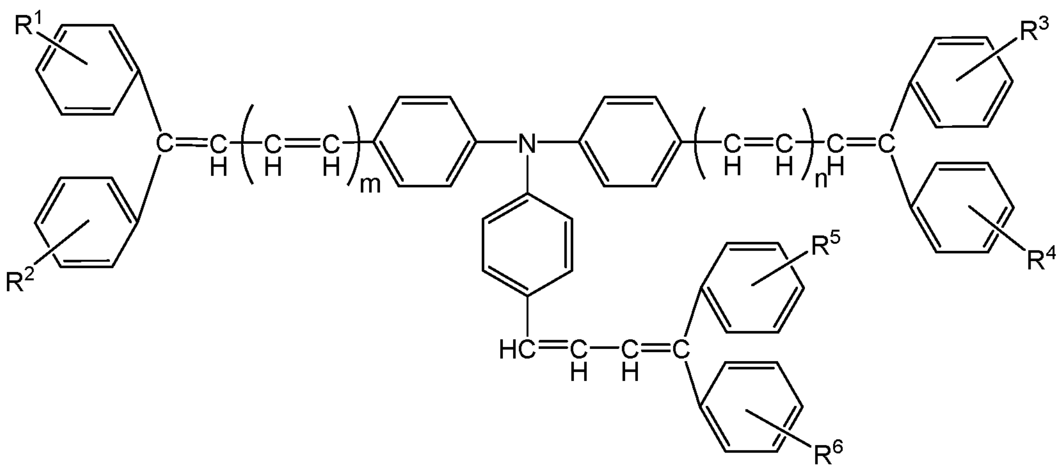

    (1)

    in the formula (1), $R^1$, $R^2$, $R^3$, $R^4$, $R^5$, and $R^6$ each independently represent a hydrogen atom, a halogen atom, a substituted or unsubstituted alkyl group having 1 or more and 20 or less carbon atoms, a substituted or unsubstituted alkoxy group having 1 or more and 20 or less carbon atoms, or a substituted or unsubstituted aryl group having 6 or more and 30 or less carbon atoms, or $R^1$ and $R^2$, $R^3$ and $R^4$, and $R^5$ and $R^6$ are each independently bonded to each other to form a hydrocarbon ring structure, and "n" and "m" each independently represent 1 or 2.

2. The electrophotographic apparatus according to claim 1, wherein a content of the silicone resin particles in the surface layer is 10 mass% or more and 100 mass% or less with respect to a content of the compound represented by the formula (1) in the surface layer.

3. The electrophotographic apparatus according to claim 1 or 2, wherein the silicone resin particles have a number-average primary particle diameter of 500 nm or more and 2,000 nm or less.

**4.** A process cartridge comprising:

an electrophotographic photosensitive member; and
a developing unit, which includes a toner, and which is configured to develop an electrostatic latent image formed on a surface of the electrophotographic photosensitive member with the toner to form a toner image on the surface of the electrophotographic photosensitive member,
the process cartridge integrally supporting the electrophotographic photosensitive member and the developing unit, and being detachably attachable onto a main body of an electrophotographic apparatus,
wherein the electrophotographic photosensitive member includes a surface layer containing a compound represented by the following formula (1), a binder resin, and silicone resin particles, and
wherein the toner includes toner particles each containing a polyester resin having a polyethylene terephthalate segment:

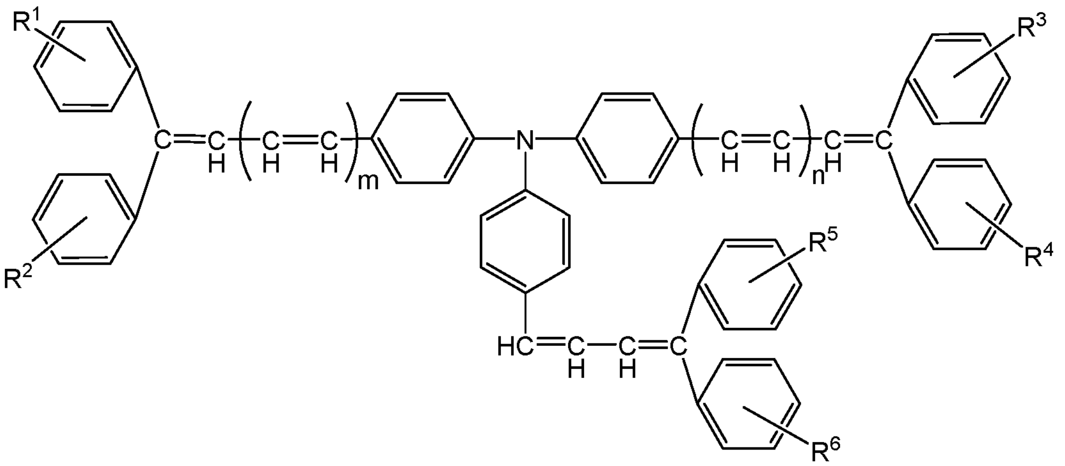
(1)

in the formula (1), $R^1$, $R^2$, $R^3$, $R^4$, $R^5$, and $R^6$ each independently represent a hydrogen atom, a halogen atom, a substituted or unsubstituted alkyl group having 1 or more and 20 or less carbon atoms, a substituted or unsubstituted alkoxy group having 1 or more and 20 or less carbon atoms, or a substituted or unsubstituted aryl group having 6 or more and 30 or less carbon atoms, or $R^1$ and $R^2$, $R^3$ and $R^4$, and $R^5$ and $R^6$ are each independently bonded to each other to form a hydrocarbon ring structure, and "n" and "m" each independently represent 1 or 2.

**5.** The electrophotographic apparatus according to any one of claims 1 to 3, wherein the toner particles each contain a binder resin, and the binder resin contains an amorphous resin A and a crystalline polyester resin C,

wherein the amorphous resin A is a polyester resin, and the amorphous resin A has, as structures for forming a polyester backbone,

(i) a polyethylene terephthalate segment, and
(ii) at least one structure selected from the group consisting of: a structure represented by the following formula (2); a structure represented by the following formula (3); a structure represented by the following formula (4); and a structure represented by the following formula (5):

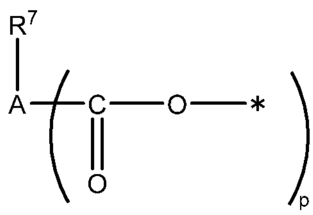
(2)

in the formula (2), $R^7$ represents an alkyl group having 6 to 16 carbon atoms or an alkenyl group having 6 to 16 carbon atoms,
A represents a hydrocarbon group,

"*" represents a bonding site in the polyester backbone, and
"p" represents an integer of 2 or more;

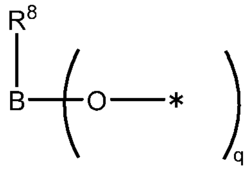

(3)

in the formula (3), $R^8$ represents an alkyl group having 6 to 16 carbon atoms or an alkenyl group having 6 to 16 carbon atoms,
B represents a hydrocarbon group,
"*" represents a bonding site in the polyester backbone, and "q" represents an integer of 2 or more;

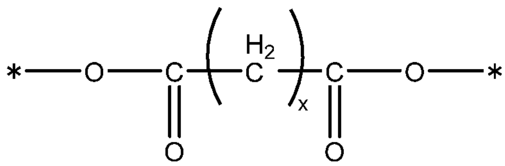

(4)

in the formula (4), "*" represents a bonding site in the polyester backbone, and "x" represents an integer of from 6 to 16;

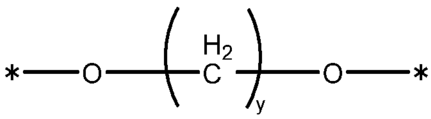

(5)

in the formula (5), "*" represents a bonding site in the polyester backbone, and "y" represents an integer of from 6 to 16,
wherein, when an SP value of the amorphous resin A is represented by $SP_A$ $(cal/cm^3)^{0.5}$, and an SP value of the crystalline polyester resin C is represented by SPc $(cal/cm^3)^{0.5}$, the $SP_A$ and the SPc satisfy the following formula (C):

$$1.00 \leq SP_A - SP_C \leq 1.35 \cdots (C),$$

wherein the toner contains a phosphorus element derived from a phosphorus compound, and
wherein, when a content of the phosphorus element in the toner based on a mass of the toner is represented by $W_P$ (ppm), the $W_P$ satisfies the following formula (D):

$$5 \leq W_P \leq 500 \cdots (D).$$

**6.** The process cartridge according to claim 4,

wherein the toner particles each contain a binder resin, and the binder resin contains an amorphous resin A and a crystalline polyester resin C,
wherein the amorphous resin A is a polyester resin, and the amorphous resin A has, as structures for forming a polyester backbone,

(i) a polyethylene terephthalate segment, and
(ii) at least one structure selected from the group consisting of: a structure represented by the following formula (2); a structure represented by the following formula (3); a structure represented by the following formula (4); and a structure represented by the following formula (5):

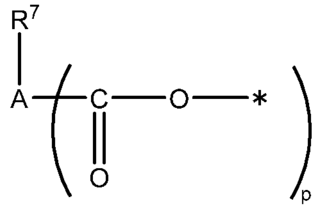

(2)

in the formula (2), $R^7$ represents an alkyl group having 6 to 16 carbon atoms or an alkenyl group having 6 to 16 carbon atoms,
A represents a hydrocarbon group,
"*" represents a bonding site in the polyester backbone, and
"p" represents an integer of 2 or more;

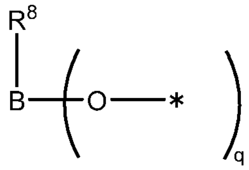

(3)

in the formula (3), $R^8$ represents an alkyl group having 6 to 16 carbon atoms or an alkenyl group having 6 to 16 carbon atoms,
B represents a hydrocarbon group,
"*" represents a bonding site in the polyester backbone, and
"q" represents an integer of 2 or more;

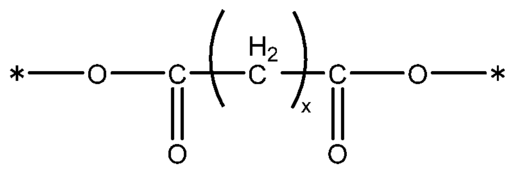

(4)

in the formula (4), "*" represents a bonding site in the polyester backbone, and "x" represents an integer of from 6 to 16;

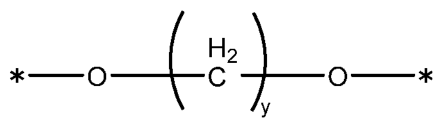

(5)

in the formula (5), "*" represents a bonding site in the polyester backbone, and "y" represents an integer of from 6 to 16,
wherein, when an SP value of the amorphous resin A is represented by $SP_A$ $(cal/cm^3)^{0.5}$, and an SP value of the crystalline polyester resin C is represented by SPc $(cal/cm^3)^{0.5}$, the $SP_A$ and the SPc satisfy the following formula (C):

$$1.00 \leq SP_A - SP_C \leq 1.35 \cdots (C),$$

wherein the toner contains a phosphorus element derived from a phosphorus compound, and
wherein, when a content of the phosphorus element in the toner based on a mass of the toner is represented by $W_P$ (ppm), the $W_P$ satisfies the following formula (D):

$$5 \leq W_P \leq 500 \cdots (D).$$

**7.** The electrophotographic apparatus according to claim 5, wherein the $W_P$ satisfies the following formula (E):

$$20 \leq W_P \leq 500 \cdots (E).$$

**8.** The process cartridge according to claim 6, wherein the $W_P$ satisfies the following formula (E):

$$20 \leq W_P \leq 500 \cdots (E).$$

FIG. 1

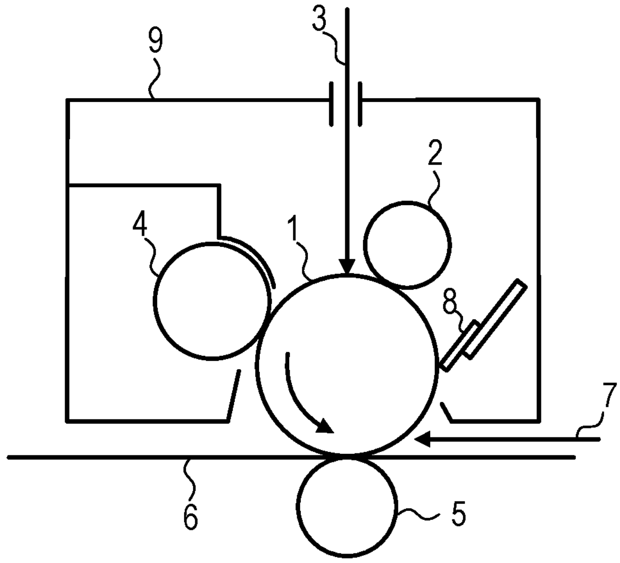


FIG. 2

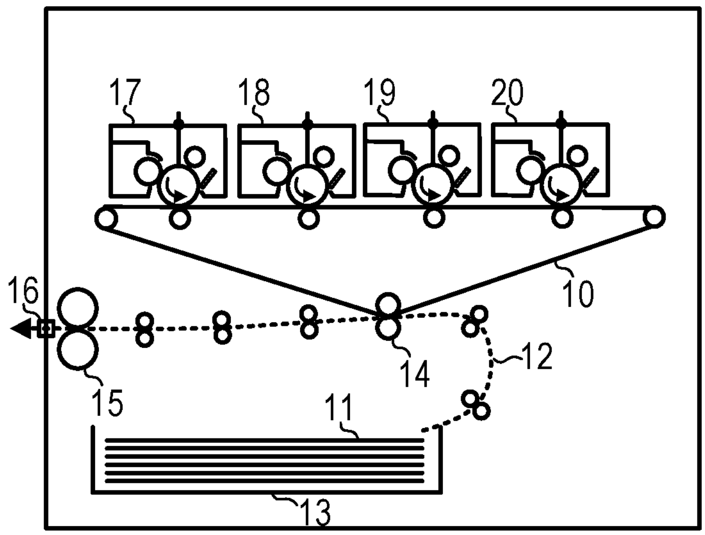

FIG. 3

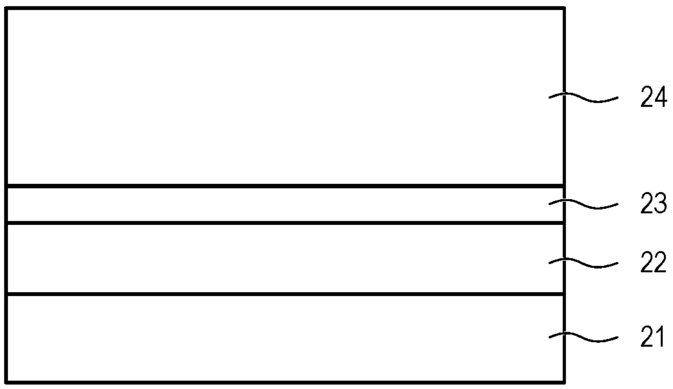

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2012 A
- JP 088397 A
- JP 2004280085 A
- JP 2012088397 A

### Non-patent literature cited in the description

- *Polym. Eng. Sci.*, 1974, vol. 14 (2), 147-154